# EUROPÄISCHE PATENTSCHRIFT

(11) **EP 4 399 632 B1**
(45) Veröffentlichungstag und Bekanntmachung des Hinweises auf die Patenterteilung: **08.10.2025**
(21) Anmeldenummer: 22744113.6
(22) Anmeldetag: 12.07.2022
(51) Int. Cl.: G06Q 20/10, H04L 9/14, G06F 21/60, H04L 9/32, G06Q 20/06, G06Q 20/30, G06Q 20/38

(54) **VERFAHREN UND TRANSAKTIONSSYSTEM ZUM ÜBERTRAGEN VON TOKEN IN EINEM ELEKTRONISCHEN TRANSAKTIONSSYSTEMS**
METHOD AND TRANSACTION SYSTEM FOR TRANSMITTING TOKENS IN AN ELECTRONIC TRANSACTION SYSTEM
PROCÉDÉ ET SYSTÈME DE TRANSACTION POUR TRANSMETTRE DES JETONS DANS UN SYSTÈME DE TRANSACTION ÉLECTRONIQUE

(30) Priorität: 08.09.2021 DE 102021004548
(43) Veröffentlichungstag der Anmeldung: 17.07.2024
(73) Patentinhaber: Giesecke+Devrient advance52 GmbH, 81677 München (DE)
(72) Erfinder: FASCHING, Matthias, 82008 Unterhaching (DE); ALFERT, Klaus, 82008 Unterhaching (DE)
(74) Vertreter: Giesecke+Devrient IP
(86) Internationale Anmeldenummer: PCT/EP2022/025324
(87) Internationale Veröffentlichungsnummer: WO 2023/036458

(56) Entgegenhaltungen:
- DE-A1- 102009 034 436
- DE-A1- 102019 002 732

## Beschreibung

Die Erfindung bezieht sich auf Verfahren zum Übertragen von Token, beispielsweise elektronischen Münzdatensätzen, in einem elektronischen Transaktionssystem, beispielsweise in einem elektronischen Bezahlsystem. Die Erfindung betrifft auch ein Transaktionssystem.

Die Erfindung bedient sich dabei eines Verfahrens zum Übertragen von Token zwischen Teilnehmereinheiten.

Die Erfindung bezieht sich insbesondere auf das Übertragen von von einer Zentralbank herausgegebenen Digitalwährung (CBDC) als Token.

### TECHNISCHER HINTERGRUND DER ERFINDUNG

Sicherheit von Transaktionen und den dazugehörigen Transaktionsdaten zum Übertragen von geldwerten Beträgen bedeutet sowohl Schutz der Vertraulichkeit der ausgetauschten Daten als auch Schutz der Integrität der ausgetauschten Daten als auch Schutz der Verfügbarkeit der ausgetauschten Daten.

Aus der DE 10 2009 038 645 A1 und der DE 10 2009 034 436 A1 sind Systeme zum Übertragen von geldwerten Beträgen in Form elektronischer Datensätze bekannt, bei denen ein Bezahlen mit Duplikaten des Datensatzes verhindert wird und ein hoher Grad an Manipulationssicherheit gegeben ist, wobei hier komplexe Strukturen und aufwendige Verschlüsselungs- und Signiervorgänge für die Transaktionen erforderlich sind. Diese sind wenig praxistauglich.

In der WO 2016/200885 A1 ist ein Verfahren zur Verschlüsselung eines mittels Blockchain-Ledger übertragenen Betrags beschrieben, wobei die Verifizierbarkeit der Transaktion des Betrags erhalten bleibt. Dabei wird ein Verschleierungsbetrag zu einem Eingangswert addiert. Dann wird ein Ausgangswert erzeugt und verschlüsselt. Sowohl der Eingangswert als auch der Ausgangswert liegen innerhalb eines Wertebereichs, wobei eine Summe von zwei beliebigen Werten innerhalb des Bereichs einen Schwellenwert nicht überschreitet. Aufwendige Bereichsprüfungen sind jedem der Eingangswerte und dem Ausgangswert zugeordnet. Diese Bereichsprüfungen sollen beweisen, dass der Eingangswert und der Ausgangswert in den zugeordneten Wertebereich fallen. Jeder öffentliche Schlüssel kann mit einer Ringsignatur signiert werden, die auf einem öffentlichen Schlüssel eines Empfängers in der Transaktion basiert. In diesem Verfahren ist eine Blockchain-Technologie notwendig, die nach Erhalt eines elektronischen Münzdatensatzes angerufen werden muss, um den elektronischen Münzdatensatz zu validieren.

In WO 2020 / 212 331 A1 und WO 2020 / 212 337 A1 werden jeweils ein System zum direkten Übertragen von elektronischen Münzdatensätzen, eMD, in einem Bezahlverfahren vorgeschlagen, bei der eine dezentrale oder zentrale Überwachungsschicht vorgesehen ist, um eMD und Modifikationen davon anonym, aber sicher zu registrieren. Teilnehmer an diesem Verfahren können anhand von maskierten eMD, die eindeutig einem eMD zugeordnet sind, die Echtheit der Münzdatensätze prüfen. Dieses Verfahren ist aufgrund der zentralen oder dezentralen Überwachungsinstanz und der notwendigen Maskierungen der Münzdatensätze rechenintensiv und komplex. Das Übertragen der eMD bedingt hier immer das Senden eines geldwerten Betrags und eines Verschleierungsbetrags.

DE 10 2019 002 732 A1 offenbart den Oberbegriff von Anspruch 1.

### ZUSAMMENFASSUNG DER ERFINDUNG

Der Erfindung liegt die Aufgabe zu Grunde, ein Verfahren zum Übertragen von Token eines Transaktionssystems zu schaffen, in denen eine Transaktion vom Token sicher, aber dennoch einfacher und weniger rechenintensiv ausgestaltet ist. Dabei soll insbesondere eine Transaktion zwischen Teilnehmereinheiten geschaffen werden. Diese Transaktion soll für Dritte anonym sein. Der Token soll nach dem Erhalt in einer Teilnehmereinheit sofort weiterverwendet werden können, um eine Transaktion auch ohne Verbindung zu einer entfernten Einheit, beispielsweise einem Tokenreferenz-Register oder einem dezentralen Ledger, zu ermöglichen. Ein empfangener Token soll einerseits geheim gegenüber nicht an der Transaktion beteiligten Teilnehmereinheiten sein. Jede Teilnehmereinheit des Transaktionssystems soll einen erhaltenen Token überprüfen können, insbesondere sollen Mehrfach-Ausgabe-Versuche und Versuche, nicht vorhandene Tokenwerte zu übertragen, von einer Teilnehmereinheit oder allgemein im Transaktionssystem erkannt werden können. Es soll möglich sein, eine Übertragung zu registrieren, auch wenn eine Teilnehmereinheit keine Kommunikationsverbindung zu einem Tokenreferenz-Register aufweist.

Die gestellte Aufgabe wird durch die in den unabhängigen Patentansprüchen beschriebenen Merkmalen gelöst. Weitere vorteilhafte Ausgestaltungen sind in den jeweils abhängigen Patentansprüchen beschrieben.

In einem ersten Aspekt wird die Aufgabe insbesondere durch ein Verfahren zum Übertragen von Token in einem elektronischen Transaktionssystem gelöst. Das Verfahren umfasst die Verfahrensschritte: Empfangen einer Übertragungsinformation von einer ersten Teilnehmereinheit in einer zweiten Teilnehmereinheit; Erzeugen eines tokenindividuellen kryptografischen Schlüsselpaars für einen zu übertragenden Token, wobei ein öffentlicher Teil des tokenindividuellen kryptografischen Schlüsselpaars durch Anwenden einer kryptografischen Einwegfunktion auf einen erzeugten privaten Teil des tokenindividuellen Schlüsselpaars erhalten wird, wobei der private Teil ein Tokenelement des zu übertragenden Tokens ist; Senden des erzeugten öffentlichen Teils des tokenindividuellen Schlüsselpaars von der zweiten Teilnehmereinheit an die erste Teilnehmereinheit; Erzeugen einer Registrieranfrage für ein Tokenreferenz-Register des Transaktionssystems umfassend zumindest eine dem zu übertragenden Token eindeutig zugeordnete Tokenreferenz als eine zu registrierende Tokenreferenz, wobei die Tokenreferenz zumindest einen Tokenwert des Tokens und den erzeugten öffentlichen Teil des tokenindividuellen Schlüsselpaars als Tokenreferenz-Elemente aufweist und eine einem Token der ersten Teilnehmereinheit zugeordnete Tokenreferenz als bereits registrierte Tokenreferenz ; Senden von der ersten Teilnehmereinheit an die zweite Teilnehmereinheit, einer Registrierbestätigung des Tokenreferenzregisters für eine erfolgte Registrierung der zu registrierenden Tokenreferenz oder der Registrieranfrage zum Registrieren der zu registrierenden Tokenreferenz in dem Tokenreferenz-Register.

Ein Transaktionssystem, beispielsweise ein digitales Währungssystem bzw. ein digitales Zentralbanksystem ist ein System in dem zumindest zwei, bevorzugt eine Vielzahl von Teilnehmereinheiten digitales Zentralbankgeld in Form von Token direkt untereinander austauschen (übertragen) können. Das Transaktionssystem ist damit beispielsweise ein Bezahltransaktionssystem zum Austausch von geldwerten Beträgen in Form von Bezahl-Token.

Ein Token ist ein zwischen Teilnehmereinheiten direkt austauschbarer Datensatz eines Transaktionssystems. Mit dem Registrieren der Tokenreferenz im Tokenreferenz-Register gilt der Token als übertragen und ab diesem Zeitpunkt ist eine empfangende Teilnehmereinheit im Besitz des Tokenwerts, den der Token repräsentiert. Mit dem Übertragenvorgang wechselt der Token demnach automatisch den Besitzer. Ein Token - ein Datensatz, der unabhängig von einer Transaktionstopologie, wie Blockchain-Topologien "Bitcoin", "Ethereum" oder "Neo", übertragbar ist - kann direkt zwischen Teilnehmereinheiten ohne dazwischengeschaltete Einheiten übertragen werden.

Im Unterschied zur Ausgestaltung in WO 2020 / 212 331 A1 und WO 2020 / 212 337 A1 wird der Token in diesem Aspekt nur indirekt durch Registrieren in dem Tokenreferenz-Register übertragen. Auf diese Weise kann auf ein Umregistrieren des Tokens nach der Übertragung verzichtet werden.

Damit ist es nicht mehr erforderlich, dass beide Teilnehmereinheiten eine Kommunikationsverbindung zu dem Tokenreferenz-Register aufweisen.

Die Übertragungsinformation kann eine Information zum Starten einer Transaktion sein. Die Übertragungsinformation kann eine Aufforderung zur Begleichung einer geldwerten Forderung (Kaufpreisinformation) durch Übertragen von Token mit entsprechendem Tokenwert sein.

Die Übertragungsinformation kann eine Tokeninformation sein.

Die Übertragungsinformation oder Tokeninformation kann eine Tokenübertragen-Absichtserklärung zur Übertragung des zu übertragenden Tokens von der ersten Teilnehmereinheit an die zweite Teilnehmereinheit sein. Die Tokeninformation dient demnach dem Informieren der zweiten Teilnehmereinheit, dass eine Übertragung eines Tokens - etwa zur Begleichung einer geldwerten Forderung gegenüber der zweiten Teilnehmereinheit - verbindlich beabsichtigt ist, ohne dass damit bereits der Token übertragen wird.

Die Übertragungsinformation oder Tokeninformation kann der Tokenwert des zu übertragenden Tokens sein. Somit erfährt die zweite Teilnehmereinheit, dass die erste Teilnehmereinheit beabsichtigt, einen Token mit dem entsprechenden Tokenwert zu übertragen. Zu diesem Zeitpunkt ist noch keine Übertragung des Tokens erfolgt.

In einer Ausgestaltung dieses Aspekts kann das tokenindividuelle Schlüsselpaar in der zweiten Teilnehmereinheit erzeugt werden. Zudem kann die Tokenreferenz vor dem Senden der Registrieranfrage von der zweiten Teilnehmereinheit an die erste Teilnehmereinheit gesendet werden. Dabei wird in Erwiderung auf die Tokeninformation von der zweiten Teilnehmereinheit bereits ein Teil des Tokens, hier der privater Teil des Schlüsselpaars, generiert und zudem ein Teil der Tokenreferenz, hier der öffentliche Teil des Schlüsselpaares, erzeugt. Die Tokenreferenz eines zu dem Zeitpunkt noch nicht übertragenen Tokens wird der ersten Teilnehmereinheit bereitgestellt, sodass beide an der Übertragung beteiligten Teilnehmereinheiten den gleichen Teil der Tokenreferenz kennen.

In dieser Ausgestaltung des Aspekts kann die Registrieranfrage von der ersten Teilnehmereinheit an das Tokenreferenz-Register gesendet werden. Die Registrieranfrage beinhaltet alle notwendigen Informationen, um die Registrierung der Tokenreferenz im Tokenreferenz-Register vorzunehmen. Ab dem Zeitpunkt der Registrierung gilt der Token als Übertragen. Der Token, umfassend den Tokenwert und den privaten Schlüsselteil, kann von der zweiten Teilnehmereinheit verwendet werden, um weitere Transaktionen durchzuführen.

In dieser Ausgestaltung des Aspekts kann eine Registerbestätigung von dem Tokenreferenz-Register an die erste Teilnehmereinheit gesendet werden. Somit wird die erste Teilnehmereinheit über den Erfolg der Registrierung in Kenntnis gesetzt.

In dieser Ausgestaltung des Aspekts kann die erste Teilnehmereinheit nach dem Registrieren-Schritt eine Registrierbestätigung an die zweite Teilnehmereinheit weiterleiten. Ab diesem Zeitpunkt gilt der Token als übertragen, vorausgesetzt, alle Tokenelemente (Tokenwert insbesondere) sind der zweiten Teilnehmereinheit bekannt.

Alternativ kann die erste Teilnehmereinheit nach dem Registrieren-Schritt - bevorzugt nach Erhalten der Registrierbestätigung von dem Tokenreferenz-Register - den Token aufweisend den Tokenwert und den öffentlichen Teil des tokenindividuellen Schlüsselpaars an die zweite Teilnehmereinheit (TE2) direkt übertragen.

In einer Ausgestaltung des Aspekts kann die Registrieranfrage in Abhängigkeit von einem Vorhandensein einer Kommunikationsverbindung mit dem Tokenreferenz-Register entweder von der ersten Teilnehmereinheit oder von der zweiten Teilnehmereinheit an das Tokenreferenz-Register gesendet werden. Bevorzugt wird eine Registrierbestätigung von dem Tokenreferenz-Register an die die Registrieranfrage an das Tokenreferenz-Register sendende Teilnehmereinheit gesendet.

Dabei kann die erste Teilnehmereinheit eine Kommunikationsverbindung zwischen der zweiten Teilnehmereinheit und dem Tokenreferenz-Register bereitstellen, wenn die Registrieranfrage von der zweiten Teilnehmereinheit an das Tokenreferenz-Register zu senden ist, die zweite Teilnehmereinheit aber keine Kommunikationsverbindung zum Tokenreferenz-Register aufweist. Oder, die zweite Teilnehmereinheit kann eine Kommunikationsverbindung zwischen der ersten Teilnehmereinheit und dem Tokenreferenz-Register bereitstellt, wenn die Registrieranfrage von der ersten Teilnehmereinheit an das Tokenreferenz-Register zu senden ist, die erste Teilnehmereinheit aber keine Kommunikationsverbindung zum Tokenreferenz-Register aufweist.

Damit kann sichergestellt werden, dass nicht zwingend jede Teilnehmereinheit eine Kommunikationsverbindung zum Tokenreferenz-Register aufweisen muss, um einen Token übertragen und registrieren zu lassen. Die Kommunikationsverbindung kann beispielsweise getunnelt werden.

In einer alternativen Ausgestaltung dieses Aspekts kann das tokenindividuelle Schlüsselpaar in der ersten Teilnehmereinheit erzeugt werden, wobei die Tokenreferenz vor dem Senden-Schritt von der ersten Teilnehmereinheit an die zweite Teilnehmereinheit gesendet wird.

Die Tokeninformation kann indirekt durch ein Übertragen eines Tokens mit einem Tokenwert größer einem geforderten Tokenwert empfangen werden. Beispielsweise überträgt die erste Teilnehmereinheit einen Token mit einem Tokenwert oberhalb des geforderten (zu begleichenden) Tokenwerts. Dies wird in der zweiten Teilnehmereinheit erkannt und sodann die Differenz aus erhaltenem Tokenwert und geforderten Tokenwert als Tokeninformation (Tokenwert des zu übertragenen Tokens) erhalten.

In dieser alternativen Ausgestaltung des Aspekts kann die Registeranfrage von der zweiten Teilnehmereinheit an das Tokenreferenz-Register gesendet werden, wobei die Registrieranfrage bevorzugt auch den geforderten Tokenwert umfasst und wobei bevorzugt eine Registerbestätigung von dem Tokenreferenz-Register an die zweite Teilnehmereinheit gesendet wird.

Nach dem Registrieren-Schritt, bevorzugt nach Erhalten der Registrierbestätigung, kann der Token aufweisend den Tokenwert und den öffentlichen Teil des tokenindividuellen Schlüsselpaars als von der zweiten Teilnehmereinheit an die erste Teilnehmereinheit übertragen gelten. Die Registrierung in dem Tokenreferenz-Register ist demnach ausreichend, um den Token zu übertragen. D

Diese Ausgestaltung des Aspekts kann beispielsweise für die Übertragung von Rückgeld (=Wechselgeld) als Erwiderung auf einen zu großen Tokenwert angewendet werden. Der zu große Tokenwert wird mit einem Token an die zweite Teilnehmereinheit übertragen und das Wechselgeld wird nur als Tokenreferenz indirekt übertragen.

In einer Ausgestaltung ist der Token ein elektronischer Münzdatensatz oder Bezahl-Token, um geldwerte Beträge zwischen Teilnehmereinheiten zu tauschen. Umgangssprachlich wird ein derartiger Bezahl-Token auch als "digitale Münze" oder "elektronische Münze", englisch "digital/electronic coin" bezeichnet und repräsentiert Bargeld in elektronischer Form.

Jeder Token im Transaktionssystem ist ein Datensatz umfassend zumindest zwei Tokenelemente.

Ein erstes Tokenelement jedes Tokens des Transaktionssystems ist ein Tokenwert, bspw. ein Vermögenswert, ein Vermögensgegenstand, ein Wirtschaftsgut und/oder ein geldwerter Betrag.

Ein zweites Tokenelement jedes Tokens des Transaktionssystems ist ein privater Teil eines tokenindividuellen Schlüsselpaars. Dieser private Teil ist ein Geheimnis im Transaktionssystem und wird nicht veröffentlicht und darf nicht mehrfach verwendet werden. Die Erzeugung des privaten Teils darf nicht vorhersagbar sein. Dieser private Teil kann eine Zufallszahl sein. Bevorzugt ist die Zufallszahl das Ergebnis eines echten Zufallsgenerators.

Aus dem Tokenwert (erstes Tokenelement) und dem privaten Teil wird der Token gebildet. Dieses Bilden ist bevorzugt das Verketten (Konkatenation) dieser beiden Tokenelemente. Jede andere Art der Verknüpfung dieser beiden Tokenelemente ist erfindungsgemäß nicht ausgeschlossen und umfasst beispielsweise das Hintereinander-Anfügen, das Einbringen in eine TLV-Datenstruktur und/oder das logische Verknüpfen.

Der Token unterscheidet sich von einem Datensatz zum klassischen Datenaustausch oder Datentransfer, da beispielsweise ein klassischer Datenaustausch auf Basis eines Frage-Antwort-Prinzips bzw. auf einer Interkommunikation zwischen den Partnern des Datenaustauschs stattfindet. Ein Token ist dementgegen einmalig und eindeutig im Transaktionssystem. Der Token steht im Kontext eines Sicherheitskonzepts, welches beispielsweise Signaturen oder kryptografische Verschlüsselungen umfasst. In einem Token sind alle Datenelemente enthalten, die für eine empfangende Teilnehmereinheit bezüglich Verifikation, Authentisierung und Weitergeben des Tokens an eine andere Teilnehmereinheit benötigt werden. Eine Interkommunikation zwischen den einen Token übertragenden Teilnehmereinheiten ist daher bei einem Token grundsätzlich nicht erforderlich.

Jeder, der im Besitz eines Tokens oder uneingeschränkten Zugriff auf den Token mit seinen Tokenelementen hat, kann diesen Token mit einer anderen Teilnehmereinheit austauschen (=übertragen). Der Besitz des Tokens mit seinen zumindest zwei Tokenelementen (Tokenwert und privater Teil des tokenindividuellen Schlüsselpaars) ist also gleichbedeutend mit dem Besitz des Wertes, den der Token repräsentiert. Hier kann der Token auch indirekt durch Registrieren einer Tokenreferenz übertragen werden.

Jedem Token im Transaktionssystem wird eine Tokenreferenz zugeordnet. Diese Zuordnung ist eineindeutig, das heißt, einem Token ist genau eine Tokenreferenz zugeordnet und jeder Tokenreferenz ist genau ein Token zugeordnet. Die Tokenreferenz ist ein öffentlicher Datensatz, der in einer Speichereinheit des Tokenreferenz-Registers des Transaktionssystems für jede Teilnehmereinheit überprüfbar abgespeichert ist.

Sowohl der Token als auch die Tokenreferenz sind einzigartig. Durch die eineindeutige Zuordnung herrscht eine 1-zu-1 Beziehung zwischen dem Token und der Tokenreferenz.

Jede Tokenreferenz im Transaktionssystem ist ein Datensatz umfassend zumindest zwei Tokenreferenz-Elemente.

Ein erstes Tokenreferenz-Element jeder Tokenreferenz ist der Tokenwert des der Tokenreferenz eindeutig zugeordneten Tokens. Der Tokenwert des Tokens ist damit identisch zum Tokenwert der zugeordneten Tokenreferenz. Beispielsweise ist der Tokenwert der Tokenreferenz eine Kopie des Tokenwerts des zugeordneten Tokens.

Ein zweites Tokenelement jeder Tokenreferenz des Transaktionssystems ist ein öffentlicher Teil des tokenindividuellen Schlüsselpaars. Dieser öffentliche Teil der Tokenreferenz bildet zusammen mit dem privaten Teil des Tokens das tokenindividuelle Schlüsselpaar. Der öffentliche Teil wird durch Anwenden einer kryptografischen Funktion auf den privaten Teil erhalten.

Diese kryptografische Funktion ist eine Einwegfunktion. Diese kryptografische Funktion ist demnach eine mathematische Funktion, die komplexitätstheoretisch "leicht" berechenbar, aber "schwer" bis praktisch unmöglich umzukehren ist. Hierbei wird unter Einwegfunktion auch eine Funktion bezeichnet, zu der bislang keine in angemessener Zeit und mit vertretbarem Aufwand praktisch ausführbare Umkehrung bekannt ist. Vorzugsweise wird eine Einwegfunktion verwendet, die auf eine Gruppe operiert, in der das diskrete Logarithmusproblem schwer zu lösen ist, wie z. B. ein kryptographisches Verfahren analog einer elliptischer-Kurve-Verschlüsselung, kurz ECC, aus einem privaten Schlüssel eines entsprechenden Kryptographie-Verfahrens. Die umgekehrte Funktion, also die Erzeugung eines Tokens (oder des Teils des elektronischen Münzdatensatzes) aus einer Tokenreferenz ist dabei sehr zeitintensiv.

Die (bloße) Kenntnis oder der Besitz einer Tokenreferenz berechtigt nicht dazu, den Tokenwert (Tokenreferenz-Element) zu verwenden/ übertragen/auszugeben. Dies stellt einen wesentlichen Unterschied zwischen der Tokenreferenz und dem Token dar und ist ein Kern der hier vorliegenden Erfindung.

Nach dem Anwenden der kryptografischen Funktion auf den privaten Teil des tokenindividuellen Schlüsselpaars wird der öffentliche Teil des tokenindividuellen Schlüsselpaars als zweites Tokenreferenz-Element erhalten.

Aus dem Tokenwert (erstes Tokenreferenz-Element) und dem öffentlichen Teil wird die Tokenreferenz gebildet. Dieses Bilden ist bevorzugt das Verketten (Konkatenation) dieser beiden Tokenreferenz-Elemente. Jede andere Art der Verknüpfung dieser beiden Tokenreferenz-Elemente ist erfindungsgemäß nicht ausgeschlossen und umfasst beispielsweise das Hintereinander-Anfügen, das Einbringen in eine TLV-Datenstruktur und/oder das logische Verknüpfen.

Eine Tokenreferenz kann bevorzugt durch eine elektronische Geldbörse (=Wallet) einer Teilnehmereinheit erzeugt werden. Die Verwendung einer Tokenreferenz ist nicht mit der Verwendung von Adressen von Teilnehmereinheiten in einem Blockchain-basierten Transaktionssystem vergleichbar, da im erfindungsgemäßen Tokenreferenz-Register keine Adressen der Teilnehmereinheiten verwendet werden, um eine Verfolgbarkeit der Token zu verhindern.

Das Verfahren zum Registrieren sieht einen Empfangen-Schritt vor, um eine Tokenreferenz in einem Tokenreferenz-Register im Rahmen einer Registrieranfrage zu empfangen. Beispielsweise wird die Registrieranfrage von einer Teilnehmereinheit des Transaktionssystems gesendet.

Das Tokenreferenz-Register ist eine Einheit des Transaktionsregisters die die Tokenreferenzen ablegt, wodurch die dazugehörigen Token registriert sind. Dieses Register kann eine zentrale Datenbank oder Speichereinheit sein. Dieses Register kann ein dezentraler Ledger, beispielsweise in einer Blockchain-Topologie sein. Das Tokenreferenz-Register kann eine Historie zu den Tokenreferenzen und/oder den Registrieranfragen führen.

Die empfangene Registrieranfrage wird durch eine Verifiziereinheit im Tokenreferenz-Register verifiziert. Dabei wird verifiziert, ob die zumindest eine Tokenreferenz der empfangenen Registrieranfrage in dem Tokenreferenz-Register bereits gespeichert ist.

Im Tokenreferenz-Register ist eine Tokenreferenz nur ein einziges Mal gespeichert. Da eine Tokenreferenz eines Tokens nur ein einziges Mal im Transaktionssystem vorhanden ist, kann durch den Verifizieren-Schritt festgestellt werden, ob versucht wurde, einen Token mehrfach auszugeben.

In einer Ausgestaltung wird im Verifizieren-Schritt durch die Verifiziereinheit des Tokenreferenz-Registers zudem festgestellt, ob die Tokenreferenz in der empfangenen Registrieranfrage einem Token zugeordnet werden kann. Dazu muss die Tokenreferenz oder eine Ableitung der Tokenreferenz oder eine Historie zu der Tokenreferenz in dem Tokenreferenz-Register abgespeichert sein, die zu der Tokenreferenz der empfangenen Registrieranfrage zugeordnet werden kann.

In einer Ausgestaltung wird im Verifizieren-Schritt festgestellt, ob die empfangene Registrieranfrage syntaktisch korrekt ist. Damit wird beispielsweise geprüft, ob die Registrieranfrage plausibel ist, ob in der Registrieranfrage ein Kommandotyp korrekt angegeben wurde, ob der Token, der der Tokenreferenz eindeutig zugeordnet ist, tatsächlich vorhanden ist (existieren kann); und/oder ob eine Differenzbildung von Tokenwerten in der Registrieranfrage zu einem in der Registrieranfrage angegebenen Kommandotyp passt.

In einer Ausgestaltung wird im Verifizieren-Schritt festgestellt, ob eine Signatur der Registrieranfrage korrekt ist.

In einer Ausgestaltung wird im Verifizieren-Schritt zudem festgestellt, ob eine Summe von Tokenwerten aller Tokenreferenzen innerhalb der Registrieranfrage null ist. Dabei werden Eingangs-Tokenwerte und Ausgangs-Tokenwerte der Registrieranfrage aufsummiert. Bei Registrieranfragen, die von Teilnehmereinheiten stammen, muss eine Summe aller Tokenwerte der Registrieranfrage null ergeben. Ergibt die Summe nicht null, so wurde in unerlaubter Weise zusätzlich ein Tokenwert im Transaktionssystem geschaffen oder ein Tokenwert aus dem Transaktionssystem vernichtet. Damit kann ein Betrugsversuch mit nicht-vorhandenen Token oder unerlaubt generierten Token leichter erkannt werden. Bislang waren aufwendige Bereichsnachweise (zero-knowledge-proofs, ZKP) notwendig, die durch dieses Verfahren entfallen können.

Die empfangene Tokenreferenz wird in einer Speichereinheit des Tokenreferenz-Registers gespeichert. Mit dem Speichern erfolgt ein Registrieren des der empfangenen Tokenreferenz eindeutig zugeordneten Tokens im Transaktionssystem. Das Speichern erfolgt nur wenn im Verifizieren-Schritt festgestellt wird, dass die zumindest eine Tokenreferenz der empfangenen Registeranfrage nicht im Tokenreferenz-Register gespeichert ist.

Das Grundprinzip des Registrierens eines Tokens ist demnach, dass eine empfangene Registrieranfrage daraufhin verifiziert wird, ob die dem Token zugeordnete Tokenreferenz im Tokenreferenz-Register bereits bekannt ist. Ist die Tokenreferenz bereits bekannt, wird sie nicht nochmal abgespeichert. Ist die Tokenreferenz nicht bekannt, wird sie in das Tokenreferenz-Register eingetragen (gespeichert), um für zukünftige Verifizier- und Prüfschritte im Transaktionssystem verfügbar zu sein.

In einer Ausgestaltung ist die empfangene Registrieranfrage mit dem privaten Teil des tokenindividuellen Schlüsselpaars signiert, um eine Zuordnung von der Tokenreferenz zu dem Token prüfen bzw. verifizieren zu können. Ist das Verifizieren im Verifizieren-Schritt erfolgreich, also kann die Signatur verifiziert werden, dann muss der Sender der Registrieranfrage im Besitz des Tokens bzw. in Kenntnis des Tokens sein. Damit kann ein Betrugsversuch mit nicht-vorhandenen Token oder unerlaubt generierten Token erkannt werden.

In einer Ausgestaltung weist das Tokenreferenz-Register eine Prüfeinheit zum Prüfen einer Summe von Tokenwerten betreffend die empfangene Registrieranfrage auf. Diese Prüfeinheit vergleicht die empfangene Registrieranfrage mit einem Datenbestand der Speichereinheit ab und prüft insbesondere eine Gesamtsumme aller Tokenwerte auf Veränderung aufgrund der Registrieranfrage. Damit kann die Gültigkeit des Tokenwerts daraufhin geprüft werden, ob ein neuer Tokenwert unerlaubter Weise generiert wurde. Damit könnten auch alte Registrieranfragen und deren Erfolg geprüft werden, diese Registrieranfragen-Historie könnte verwendet werden, um ohne Belastung der Speichereinheit des Tokenreferenz-Registers, doppelt gesendete Registrieranfragen zu bearbeiten.

In einer Ausgestaltung kann der zu übertragende Token durch einen Aufteilen-Schritt eines in der ersten Teilnehmereinheit enthaltenen Tokens erhalten worden sein, wobei zum Aufteilen des enthaltenen Tokens in der ersten Teilnehmereinheit die folgenden Verfahrensschritte durchgeführt werden: Aufteilen des Tokenwerts des enthaltenen Tokens in einen ersten Tokenteilwert und in einen zweiten Tokenteilwert, wobei die Summe aus dem ersten Tokenteilwert und dem zweiten Tokenteilwert dem Tokenwert des aufzuteilenden Tokens entspricht; Empfangen der Tokenreferenz für den zu übertragenden Token von der zweiten Teilnehmereinheit aufweisend den erzeugten öffentlichen Teil des tokenindividuellen Schlüsselpaars des zu übertragenden Tokens; Erzeugen einer Tokenreferenz in der ersten Teilnehmereinheit für einen aufgeteilten Token aufweisend den zweiten Tokenteilwert und einen erzeugten öffentlichen Teil eines tokenindividuellen Schlüsselpaars des zweiten aufgeteilten Tokens; und Erzeugen der Registrieranfrage umfassend die Tokenreferenz des enthaltenen Tokens der ersten Teilnehmereinheit, der Tokenreferenz für den zu übertragenden Token und der Tokenreferenz für den aufgeteilten Token.

Die Aufteilung kann symmetrisch erfolgen, sodass die aufgeteilten Tokenwerte gleich groß sind. Die Aufteilung kann asymmetrisch erfolgen, sodass die aufgeteilten Tokenwerte ungleich groß sind.

In einer Ausgestaltung kann der zu übertragende Token durch einen Umschalten-Schritt eines in der ersten Teilnehmereinheit enthaltenen Tokens erhalten werden, wobei zum Umschalten des enthaltenen Tokens in der ersten Teilnehmereinheit die folgenden Verfahrensschritte durchgeführt werden: Empfangen der Tokenreferenz für den zu übertragenden Token von der zweiten Teilnehmereinheit aufweisend den erzeugten öffentlichen Teil des tokenindividuellen Schlüsselpaars des zu übertragenden Tokens; Erzeugen der Registrieranfrage umfassend die Tokenreferenz des enthaltenen Tokens und die Tokenreferenz für den zu übertragenden Token.

Die Umschaltung des Tokens ist eine weitere Modifikationsmöglichkeit. Die in der Registrieranfrage enthaltenen Tokenreferenzen können durch Verkettung (Konkatenation) aneinandergefügt sein. Wird ein Token von einer Teilnehmereinheit direkt an eine andere Teilnehmereinheit übertragen, beispielsweise wenn im Rahmen einer Bezahltransaktion der geldwerte Betrag als Tokenwert übertragen werden soll, so kann die sendende Teilnehmereinheit nun den Tokenwert auf sich umregistrieren lassen. Damit wird im Tokenreferenz-Register die Umschaltung registriert.

Beim Übertragen eines Tokens zwischen zwei Teilnehmereinheiten, haben diese beiden Teilnehmereinheiten zugleich Kenntnis über den Token. Um zu verhindern, dass die sendende Teilnehmereinheit den Token auch noch bei einer anderen (dritten) Teilnehmereinheit ebenfalls verwendet (sogenanntes Mehrfachausgeben des Tokens), wird bevorzugt ein Umschalten ("Switch") des übertragenen Tokens von der ersten Teilnehmereinheit auf die zweite Teilnehmereinheit ausgeführt.

Der Tokenwert des umzuschaltenden Tokens entspricht dem Tokenwert des zu übertragenden Tokens. Beim Umschalten wird demnach ein Token mit gleichem Tokenwert aber neuem privaten Teil bei dem Tokenreferenz-Register registriert.

In einem weiteren Aspekt der Erfindung ist ein Verfahren zum Übertragen von Token in einem elektronischen Transaktionssystem mit den folgenden Verfahrensschritten vorgesehen: Empfangen einer Tokeninformation für einen zu übertragenden Token von einer ersten Teilnehmereinheit in einer zweiten Teilnehmereinheit; Erzeugen eines tokenindividuellen kryptografischen Schlüsselpaars für den zu übertragenden Token in der zweiten Teilnehmereinheit, wobei ein öffentlicher Teil des tokenindividuellen kryptografischen Schlüsselpaars durch Anwenden einer kryptografischen Einwegfunktion auf einen erzeugten privaten Teil des tokenindividuellen Schlüsselpaars erhalten wird, wobei der private Teil ein Tokenelement des zu übertragenden Tokens ist; Senden, an die erste Teilnehmereinheit, einer dem zu übertragenden Token eindeutig zugeordneten Tokenreferenz, wobei die Tokenreferenz zumindest einen Tokenwert des Tokens und den erzeugten öffentlichen Teil des tokenindividuellen Schlüsselpaars als Tokenreferenz-Elemente aufweist; und Umschalten eines in der ersten Teilnehmereinheit enthaltenen Tokens auf den zu übertragenden Token oder Aufteilen eines in der ersten Teilnehmereinheit enthaltenen Tokens zum Erhalten des zu übertragenden Tokens; Senden, von der ersten Teilnehmereinheit an die zweite Teilnehmereinheit, eines Beweisdatensatzes aufweisend die zugeordnete Tokenreferenz und eine Tokenreferenz des umzuschaltenden oder aufzuteilenden Tokens, woraufhin der zu übertragende Token als von der ersten Teilnehmereinheit an die zweite Teilnehmereinheit übertragen gilt.

Dieser Aspekt ermöglicht ebenfalls eine nur indirekte Übertragung der Token zwischen Teilnehmereinheiten und darüber hinaus ist die Übertragung eine reine "Offline" Transaktion ohne Tokenreferenz-Register. Denn, bei diesem Aspekt fehlt es an der Registrierung im Tokenreferenz-Register und die Token werden dennoch nicht direkt zwischen den Teilnehmereinheiten übertragen. Per Übereinkunft im Tokenreferenz-Register wird anstelle der Registrieranfrage an das Transaktionssystem nur ein Beweisdatensatz von der ersten Teilnehmereinheit erzeugt und zwischen den beiden Teilnehmereinheiten direkt ausgetauscht. Die zweite Teilnehmereinheit (Empfänger) kann aufgrund dieses Beweisdatensatzes das Vorhandensein und den rechtmäßigen Besitz des Tokens verifizieren und kann auf das Registrieren im Tokenreferenz-Register verzichten. Die Struktur bzw. der Aufbau des Beweisdatensatzes kann der Struktur bzw. dem Aufbau der Registrieranfrage entsprechen. Somit kann in diesem Aspekt ein Token mit reduziertem Aufwand (keine Registrierung im Register) übertragen werden.

Der Token ist in einer Teilnehmereinheit abgelegt. Die Teilnehmereinheit kann eine Vielzahl von Token aufweisen, beispielsweise kann in einem Datenspeicher der Teilnehmereinheit die Vielzahl von Token abgelegt sein. Der Datenspeicher kann beispielsweise intern, extern oder virtuell sein. In einer Ausgestaltung kann beim Empfangen eines Tokens automatisch ein "Verbinden" stattfinden, sodass bevorzugt nur ein (oder eine bestimmte Anzahl an) Token in der Teilnehmereinheit abgelegt sind.

Bevorzugt ist in der Teilnehmereinheit nur ein Token vorhanden, sodass unmittelbar vor einem Senden eines Tokens im Rahmen eines Bezahlvorgang ein Aufteilen erfolgt und unmittelbar nach dem Empfangen eines Tokens im Rahmen eines Bezahlvorgangs ein Verbinden-Schritt erfolgt.

Die Teilnehmereinheit kann beispielsweise ein mobiles Endgerät, wie z.B. ein Smartphone, ein Tablet-Computer, ein Computer, ein Server oder eine Maschine sein. Die Teilnehmereinheit kann eine Smartcard sein, die betriebsbereit in einem Endgerät eingebracht ist.

Der Datenspeicher ist beispielsweise einen Geldbörsenspeicher einer elektronischen Geldbörse (Wallet). Die elektronische Geldbörse ist beispielsweise eine Softwareapplikation, die auf einer Teilnehmereinheit ausführbar abgespeichert ist. Die elektronische Geldbörse (Wallet) kann der Teilnehmereinheit die Teilnahme am Transaktionssystem ermöglichen. So kann die elektronische Geldbörse eine Registrieranfrage generieren, um einen Token in einem Tokenreferenz-Register zu registrieren. Zudem kann die elektronische Geldbörse Modifikationen (Umschalten, Verbinden, Aufteilen) an einem Token vornehmen und die dabei möglicherweise notwendigen Registrieranfragen generieren und an das Tokenreferenz-Register senden. Zudem kann die elektronische Geldbörse Token an eine andere Geldbörse (in einer anderen Teilnehmereinheit) übertragen.

Die Übertragung des Tokens im Transaktionssystem ist vorzugsweise atomar.

Das Tokenreferenz-Register hat demnach Kenntnis über Tokenreferenzen von Token des Transaktionssystems und führt bevorzugt auch die Verarbeitungen bzw. Modifikationen an den Token (Token-Historie). Die Transaktionen mit den Token wird in dem Tokenreferenz-Register nicht registriert und findet in einer Direkttransaktionsschicht des Transaktionssystems direkt zwischen Teilnehmereinheiten des Transaktionssystems statt.

Erfindungsgemäß ist ein Tokenreferenz-Register für ein Transaktionssystem vorgesehen, das eingerichtet ist zum Durchführen der Verfahrensschritte gemäß dem zuvor beschriebenen Verfahren.

In einem weiteren Aspekt ist ein Transaktionssystem vorgesehen, dass eine Vielzahl von Teilnehmereinheiten aufweist, die jeweils eingerichtet sind zum direkten Übertragen von Token gemäß den vorangegangen beschriebenen Verfahren.

Das Transaktionssystem kann umfassen: eine erste Teilnehmereinheit, eingerichtet zum Senden einer Übertragungsinformation für einen zu übertragenden Token an eine zweite Teilnehmereinheit. Die erste Teilnehmereinheit oder eine zweite Teilnehmereinheit ist eingerichtet zum Erzeugen eines tokenindividuellen kryptografischen Schlüsselpaars für den zu übertragenden Token, wobei ein öffentlicher Teil des tokenindividuellen kryptografischen Schlüsselpaars durch Anwenden einer kryptografischen Einwegfunktion auf einen erzeugten privaten Teil des tokenindividuellen Schlüsselpaars erhalten wird, wobei der private Teil ein Tokenelement des zu übertragenden Tokens ist. Das Transaktionssystem umfasst zudem ein Tokenreferenz-Register, das eingerichtet ist zum Empfangen einer, von der ersten Teilnehmereinheit oder der zweiten Teilnehmereinheit gesendeten, Registrieranfrage. Die Registrieranfrage umfasst zumindest eine dem zu übertragenden Token eindeutig zugeordnete Tokenreferenz als eine zu registrierende Tokenreferenz, wobei die Tokenreferenz zumindest einen Tokenwert des Tokens und den erzeugten öffentlichen Teil des tokenindividuellen Schlüsselpaars als Tokenreferenz-Elemente aufweist und eine einem Token der ersten Teilnehmereinheit zugeordnete Tokenreferenz als bereits registrierte Tokenreferenz.

Das Transaktionssystem kann alternativ umfassen: eine erste Teilnehmereinheit, eingerichtet zum Senden einer Tokeninformation für einen zu übertragenden Token an einer zweiten Teilnehmereinheit; eine zweite Teilnehmereinheit, eingerichtet zum Erzeugen eines tokenindividuellen kryptografischen Schlüsselpaars für den zu übertragenden Token in der zweiten Teilnehmereinheit, wobei ein öffentlicher Teil des tokenindividuellen kryptografischen Schlüsselpaars durch Anwenden einer kryptografischen Einwegfunktion auf einen erzeugten privaten Teil des tokenindividuellen Schlüsselpaars erhalten wird, wobei der private Teil ein Tokenelement des zu übertragenden Tokens ist. Die zweite Teilnehmereinheit ist auch dazu eingerichtet an die erste Teilnehmereinheit eine dem zu übertragenden Token eindeutig zugeordnete Tokenreferenz zu senden, wobei die Tokenreferenz zumindest einen Tokenwert des Tokens und den erzeugten öffentlichen Teil des tokenindividuellen Schlüsselpaars als Tokenreferenz-Elemente aufweist. Die erste Teilnehmereinheit ist weiter dazu eingerichtet einen in der ersten Teilnehmereinheit enthaltenen Token auf den zu übertragenden Token umzuschalten oder die erste Teilnehmereinheit ist weiter dazu eingerichtet, einen in der ersten Teilnehmereinheit enthaltenen Token zum Erhalten des zu übertragenden Tokens aufzuteilen. Die erste Teilnehmereinheit ist dann weiter eingerichtet zum Senden, an die zweite Teilnehmereinheit, eines Beweisdatensatzes aufweisend die zugeordnete Tokenreferenz und eine Tokenreferenz des umzuschaltenden oder aufzuteilenden Tokens, woraufhin der zu übertragende Token als von der ersten Teilnehmereinheit an die zweite Teilnehmereinheit übertragen gilt.

Das Tokenreferenzregister kann eine Instanz eines Zentralwährungssystems sein und jeder Token kann ein digitales Zentralbankgeld sein.

Es kann ein Transaktionssystem vorgesehen sein, das aufweist: eine Registerschicht mit dem Tokenreferenz-Register der vorhergehend beschriebenen Art zum Registrieren von Tokenreferenzen; und eine Direkttransaktionsschicht mit einer Vielzahl von Teilnehmereinheiten, eingerichtet zum direkten Austausch von Token untereinander entsprechend der vorhergehend beschriebenen Art. In der Registerschicht würden keine Transaktionen protokolliert werden, sondern ausschließlich Tokenreferenzen abgespeichert und Modifikationen zu Token über entsprechend angepasste Tokenreferenzen zum Zweck der Verifizierung der Gültigkeit von Token abgespeichert werden. So wird die Anonymität der Teilnehmer des Transaktionssystems gewährleistet. Das Tokenreferenz-Register gibt auf Anfrage Auskunft über die Tokenreferenzen, die eindeutig zu den Token des Transaktionssystems zugeordnet sind, um beispielsweise eine Mehrfach-Ausgabe des gleichen Tokens zu vermeiden oder die Echtheit des Tokens zu verifizieren.

Die Speichereinheit des Tokenreferenz-Registers speichert bevorzugt nur Tokenreferenzen von im Transaktionssystem tatsächlich vorhandenen Token. Sobald ein Token modifiziert wird und eine entsprechende (modifizierte) Tokenreferenz registriert werden soll, werden die (alten) Tokenreferenzen ungültig und (nur) die modifizierten Tokenreferenzen werden in der Speichereinheit gespeichert.

Das Transaktionssystem kann zur Verwaltung der Token Transaktionsregisterdaten an ein Transaktionsregister senden. Die Transaktionsregisterdaten umfassen insbesondere einen eindeutigen Transaktions-Identifikator, einen Transaktionsbetrag, einen Identifikator der ersten Teilnehmereinheit, einen Identifikator der zweiten Teilnehmereinheit und die (mindestens eine) Tokenreferenz des Token im Tokenreferenzregister.

Ein digitales Währungs-System als das Transaktionssystem umfasst eine Vielzahl der beschriebenen Teilnehmereinheiten, das Tokenreferenzregister sowie optional eine Mehrzahl von Münzdepot-Verwaltungseinheiten und/oder ein Transaktionsregister.

Die vorliegende Lösung ist besonders vorteilhaft, da die hohe Flexibilität in der Teilnehmereinheiten unabhängig von dem Tokenreferenzregister und/oder dem Transaktionsregister angeboten werden kann. Insbesondere wird das Tokenreferenzregister, an welches in einem digitalen Währungssystem bereits besonders hohe Anforderungen gestellt werden, nicht verlangsamt.

Eine Teilnehmereinheit kann vorliegend ein sicheres Element (Secure Element) sein, das einen gesicherten Zugriff auf einen oder mehrere Token in einem Tokenspeicher hat. Das sichere Element ist beispielsweise betriebsbereit in einem Endgerät eingebracht. Das sichere Element und oder das Endgerät haben ein spezielles Computerprogrammprodukt (elektronische Geldbörse, Wallet), insbesondere in Form einer abgesicherten Laufzeitumgebung innerhalb eines Betriebssystems eines Endgeräts, englisch Trusted Execution Environments, TEE, gespeichert auf einem Datenspeicher, beispielsweise eines mobilen Endgeräts, einer Maschine oder eines Bankautomaten. Alternativ ist das sichere Element beispielsweise als spezielle Hardware, insbesondere in Form eines gesicherten Hardware-Plattform-Moduls, englisch Trusted Platform Module, TPM oder als ein eingebettetes Sicherheitsmodul, eUICC, eSIM, ausgebildet. Das sichere Element stellt eine vertrauenswürdige Umgebung bereit.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Fig. 1 zeigt ein Ausführungsbeispiel eines Transaktionssystems TS;
Fig. 2a zeigt eine Übersicht über erfindungsgemäße Kommandos für Token;
Fig. 2b zeigt eine Übersicht über erfindungsgemäße signierte Registrieranfragen für die erfindungsgemäßen Kommandos;
Fig. 3 zeigt ein Ausführungsbeispiel eines Ablaufdiagrams eines erfindungsgemäßen Verfahrens zum Übertragen eines Tokens auf Basis eines Umschaltens eines Tokens;
Fig. 4 zeigt ein Ausführungsbeispiel eines Ablaufdiagrams eines erfindungsgemäßen Verfahrens zum Übertragen eines Tokens auf Basis eines Aufteilens eines Tokens;
Fig. 5 zeigt ein Ausführungsbeispiel eines Ablaufdiagrams eines erfindungsgemäßen Verfahrens zum Übertragen eines Tokens auf Basis einer Rückgeldtransaktion;
Fig. 6 zeigt ein Ausführungsbeispiel eines Ablaufdiagrams eines erfindungsgemäßen Verfahrens zum Übertragen eines Tokens ohne Registrieren des Tokens auf Basis eines Umschaltens eines Tokens; und
Fig. 7 zeigt ein Ausführungsbeispiel eines Ablaufdiagrams eines erfindungsgemäßen Verfahrens zum Übertragen eines Tokens ohne Registrieren des Tokens auf Basis eines Aufteilens eines Tokens.

### DETAILLIERTE BESCHREIBUNG VON AUSFÜHRUNGSBEISPIELEN

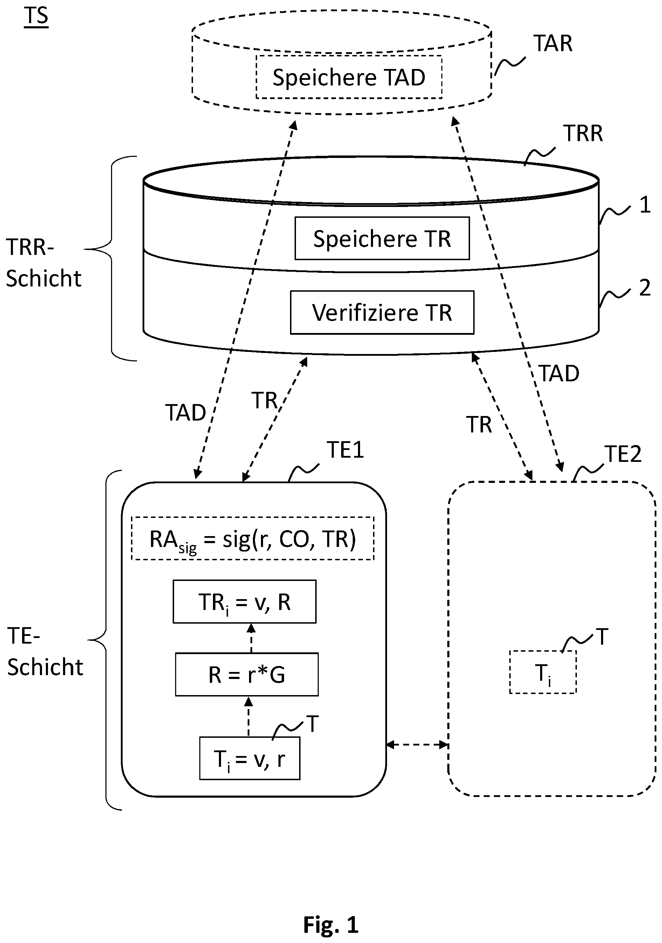

Fig. 1 zeigt ein Ausführungsbeispiel eines Transaktionssystems TS. Das Transaktionssystem TS kann ein digitales Zentralbank-Währungs-System sein. Ein (nicht dargestellter) Tokenherausgeber gibt Token T als digitale Münzdatensätze heraus. Der Tokenherausgeber fordert zudem eine initiale Registrierung der Token T in einem Tokenreferenzregister TRR des Transaktionssystems TS (= der Zentralbank) an.

Das Transaktionssystem TS umfasst dazu eine Registerschicht TRR-Schicht, in der ein Tokenreferenz-Register TRR angeordnet ist. Das TS umfasst zudem eine Direkttransaktionsschicht TE-Schicht, in der eine Vielzahl von Teilnehmereinheiten TE vorgesehen sein können, stellvertretend sind zwei Teilnehmereinheiten TE1, TE2 gezeigt.

Die Teilnehmereinheiten TE des Transaktionssystem TS sind eingerichtet, Token T direkt untereinander auszutauschen. Im Fall von Fig. 1 sind die Token Bezahl-Token, die auch als digitale Münze bezeichnet werden. Jeder Token T kann von einem Tokenherausgeber generiert worden sein (nicht gezeigt). Jeder Token T kann von jeder Teilnehmereinheit TE aufgeteilt, verbunden oder umgeschaltet werden (nicht dargestellt) und kann von dem Tokenherausgeber TH generiert und auch gelöscht werden(nicht dargestellt). Ein Tokenherausgeber TH ist beispielsweise eine Zentralbank.

In einem optionalen Transaktionsregister TAR werden Transaktionsdatensätze TAD gespeichert. Ein Transaktionsdatensatz TAD wird beispielsweise den Transaktionsbetrag, eine Transaktions-ID, Identifikatoren für TE1 und TE2 und zumindest die Tokenreferenz TR eines zu übertragenden Token T umfassen und kann von den Teilnehmereinheiten TE selbst erzeugt worden sein.

Ein Token T wird durch einen Tokenwert v und eine Zufallszahl r als Tokenelemente eindeutig im Transaktionssystem TS repräsentiert. Der Tokenwert v kann in einem Wertebereich von 1 bis 2³¹-1 angegeben werden. Die Zufallszahl r kann eine Zahl im Bereich von 0 bis 2²⁵⁶ -1, also die Ordnung einer elliptischen Kurve, beispielsweise secp256r1, sein.

Die Zufallszahl r ist dabei ein privater Teil eines tokenindividuellen Schlüsselpaars. Die Zufallszahl r ist im Transaktionssystem TS einmalig und geheim und darf nicht veröffentlicht oder wiederverwendet werden. Die Erzeugung der Zufallszahl r darf nichtvorhersehbar sein.

Beispielsweise ist der Tokenwert v ein 32 Bit großes Tokenelement vom Typ integer. Beispielsweise ist die Zufallszahl r ein 32 Byte großes Tokenelement vom Typ integer. Eine Teilnehmereinheit TE hat exklusiven Zugriff auf diesen Tokenspeicher oder umfasst diesen Tokenspeicher in einem Datenspeicher der Teilnehmereinheit TE.

Ein Token kann als ein TLV kodierter Datensatz in einem Tokenspeicher abgelegt sein und weist dann einen eindeutigen Tag und eine Längeninformation auf, beispielsweise in folgendem Format auf.

| Name | Tag (hex) | Länge | Tokenwert v | Zufallszahl r |
|---|---|---|---|---|
| TLV-kodierter | 42 | 1 Byte | 4 Byte | 32 Byte |
| Token | | | | |

Ein Beispiel eines TLV-codierten Token in hexadezimaler Form ist nachfolgend dargestellt:
42 24 00 00 40 00 00 01 02 03 04 05 06 07 08 09 0A 0B 0C 0D 0E 0F 10 11 12 13 14 15 16 17 18 19 1A 1B 1C 1D 1E 1F
und wird wie folgt interpretiert:
   "42" ist der Tag zur Identifizierung des TLV-kodierten Tokens T;
   "24" zeigt die Länge an, hier also, dass es sich um einen 36 Byte großen Datensatz handelt;
   "00 00 40 00" ist der Tokenwert (integer) v = 16384 und beträgt demnach € 163,84;
   "00 01 02 03 04 05 06 07 08 09 ... 1D 1E 1F" ist die Zufallszahl r als integer.

Für jeden Token T kann im Tokenreferenz-Register TRR eine Tokenreferenz TR gespeichert werden. Die Tokenreferenz TR umfasst den Tokenwert v des zugeordneten Tokens T und einen öffentlichen Teil R des tokenindividuellen Schlüsselpaars. Die Tokenreferenz TR des Tokens T kann jederzeit im Register TRR des Transaktionssystems TS eingesehen werden. Damit ist der Tokenwert v eines Tokens T durch das Tokenreferenz-Register TRR offengelegt.

Der öffentliche Teil R des tokenindividuellen Schlüsselpaars wird durch Anwenden einer kryptografischen Funktion auf den privaten Teil r des tokenindividuellen Schlüsselpaars erzeugt. Diese Funktion ist schwer umkehrbar und gibt dem Transaktionssystem TS so die gebotene Sicherheit. Es gilt R = r * G, wobei G beispielsweise ein globaler Parameter des Transaktionssystems TS, bspw. ein Generatorpunkt einer elliptischen Kurve, hier der secp256r1-Kurve, sein kann.

Die Tokenreferenz TR wird dann gebildet durch den Tokenwert v des Tokens T und den öffentlichen Teil R des Schlüsselpaars. Die Tokenreferenz TR ist somit die Verknüpfung oder Verkettung von Tokenwert v und öffentlichem Teil R.

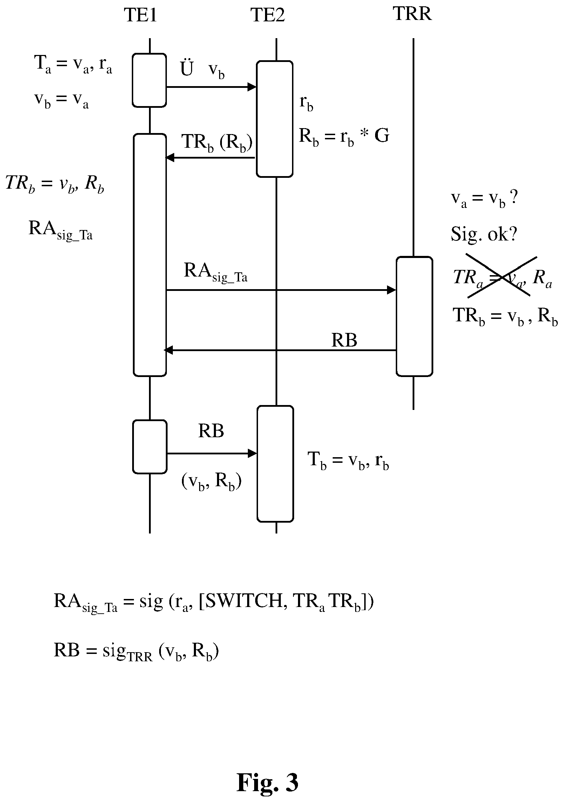

Diese Tokenreferenz TR kann als Registrieranfrage RA ggf. zusammen mit einem Kommando (siehe Übersicht in Figuren 3a und 3b) bezüglich des Tokens T an das Tokenreferenz-Register TRR gesendet werden.

Zusätzlich kann die Registrieranfrage RA mit dem privaten Teil r des tokenindividuellen Schlüsselpaars signiert werden. Das Signieren ermöglicht es, zu verifizieren, ob der Sender der Tokenreferenz TR im Besitz des Tokens T war, wodurch die Sicherheit im Transaktionssystem TS weiter erhöht ist.

In der Teilnehmereinheit TE wird die signierte Registrieranfrage RA_{sig} als ein sogenannter Beweisdatensatz, PR (für Proof) abgelegt, beispielsweise in folgendem Format:

| Typ | Tag (hex) | Länge | Daten |
|---|---|---|---|
| PR | 4A | N Bytes | |

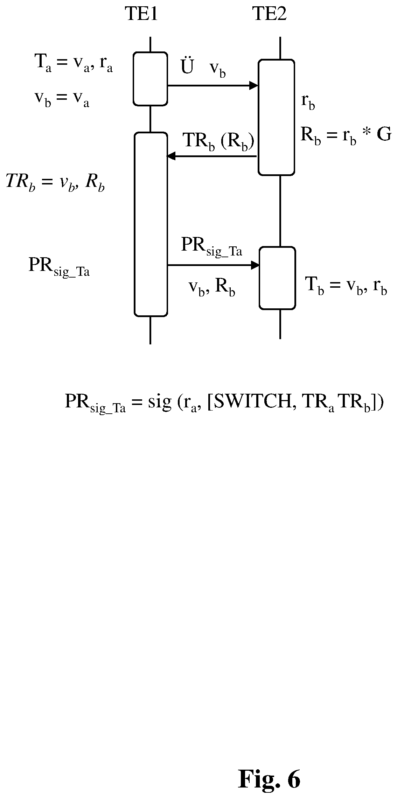

Ein Beispiel eines PR (=RA_{sig}) in hexadezimaler Form ist nachfolgend dargestellt:
4A 81 8F 03 11 12 13 14 15 16 17 18 19 1A 1B 1C 1D 1E 1F 20 21 22 23 24 25 26 27 28 29 2A 2B 2C 2D 2E 2F 30 31 32 33 34 35 36 37 38 39 3A 3B 3C 3D 3E 3F 40 41 42 43 44 45 46 47 48 49 4A 4B 4C 4D 4E 4F 50 51 52 53 54 55 56 30 46 11 12 13 14 15 16 17 18 19 1A 1B 1C 1D 1E 1F 20 21 22 23 24 25 26 27 28 29 2A 2B 2C 2D 2E 2F 30 31 32 33 34 35 36 37 38 39 3A 3B 3C 3D 3E 3F 40 4142 43 44 45 46 47 48 49 4A 4B 4C 4D 4E 4F 50 51 52 53 54 55 56
und wird wie folgt interpretiert (siehe auch Fig. 3 oder Fig. 6):
   "4A" ist der Tag zur Identifizierung des TLV-Proof RA_{sig_Th};
   "81 8F" zeigt die Länge an;
   "03" zeig an, dass es sich um eine Umschalte (=SWITCH) Registrieranfrage handelt;
   "11 12 13 14" ist der Tokenwert vₐ;
   "15 16 17 18 19 1A 1B 1C 1D 1E 1F 20 21 22 23 24 25 26 27 28 29 2A 2B 2C 2D 2E 2F 30 31 32 33 34 35" ist der öffentliche Teil Rₐ;
   "36 37 38 39 3A 3B 3C 3D 3E 3F 40 41 42 43 44 45 46 47 48 49 4A 4B 4C 4D 4E 4F 50 51 52 53 54 55 56" ist der öffentliche Teil Rₕ;
   "30 46 11 12 13 14 15 16 17 18 19 1A 1B 1C 1D 1E 1F 20 21 22 23 24 25 26 27 28 29 2A 2B 2C 2D 2E 2F 30 31 32 33 34 35 36 37 38 39 3A 3B 3C 3D 3E 3F 40 41 42 43 44 45 46 47 48 49 4A 4B 4C 4D 4E 4F 50 51 52 53 54 55 56" ist die Signatur als X690-Sequenz.

Diese Registrieranfrage RA kann an das Tokenreferenz-Register TRR gesendet werden. Im Tokenreferenz-Register TRR wird diese Registrieranfrage RA empfangen. Nach Prüfung der Registrieranfrage RA durch das Tokenreferenz-Register TRR wird die Tokenreferenz TR im Tokenreferenz-Register TRR abgelegt, wodurch der Token T im Transaktionssystem TS registriert ist.

Diese Tokenreferenz TR ist dem Token T eindeutig zugeordnet und dient zur Registrierung des Tokens T im Transaktionssystem TS. Die Tokenreferenz TR ist demnach die öffentliche Repräsentation des Tokens T aus der Direkttransaktionsschicht TE-Schicht. Das alleinige Wissen oder nur der Besitz der Tokenreferenz TR erlaubt es nicht, den Token T zu übertragen und ist nicht gleichbedeutend damit, dass die TE im Besitz des Tokens T ist. Die Tokenreferenz TR dient zur Verhinderung von Mehrfachausgabe-Versuchen und prüft, ob Tokenwerte v in unzulässiger Weise generiert wurden. Deshalb wird im Tokenreferenz-Register TRR die Tokenreferenz TR und ggf. die Historie über die Token T und die entsprechenden Registrieranfragen RA von Teilnehmereinheiten TE abgelegt.

Die Token T werden beispielsweise in elektronischen Geldbörsen, sogenannten Wallets, einer TE abgelegt. Diese Wallets sind beispielsweise Softwareapplikationen innerhalb der Teilnehmereinheiten TE oder eines Endgeräts, in dem die TE betriebsbereit eingebracht ist. Ein Wallet kann als Applikation auf einem Smartphone, einer Smartcard oder einem Bezahlterminal eingerichtet sein. Das Wallet dient dazu, Token T der TE sicher zu verwalten, Tokenreferenzen TR zu erzeugen, Token T zu modifizieren und/oder Token T auszutauschen. Wallets dienen dazu, mit dem Tokenreferenz-Register TRR zu kommunizieren, Registrieranfragen RA an das Tokenreferenz-Register TRR zu generieren und/oder Transaktion von Token T zu einer Teilnehmereinheit TE vorzunehmen.

Für eine Transaktion mit einer Teilnehmereinheit TE ist es nicht notwendig, dass eine Kommunikationsverbindung zu dem Tokenreferenz-Register TRR des Transaktionssystems TS besteht. Das Transaktionssystem TS ist dazu eingerichtet, eine Transaktion "offline", also ohne Kommunikationsverbindung mit dem Tokenreferenz-Register TRR, durchzuführen. Eine entsprechende Registrierung von Token T kann daher einer Übertragung des Token T zu einer Teilnehmereinheit TE zeitlich nachgelagert sein.

Das Tokenreferenz-Register TRR ist eine Einheit des Transaktionssystems TS und ist entweder ein zentrales Register oder eine zentrale Datenbank des Transaktionssystems TS oder ein dezentrales Register oder eine dezentrale Datenbank (DLT) des Transaktionssystems TS.

Das Übertragen einer Tokenreferenz TR von einer elektronischen Geldbörse erfolgt beispielsweise als APDU Kommando(s) zu einem Endgerät (Smartphone) als Teilnehmereinheit TE. Ein APDU ist ein kombinierter Kommando-/Datenblock eines Verbindungsprotokolls zwischen dem sicheren Element und dem Endgerät. Die Struktur der APDU ist durch den Standard ISO-7816-4 definiert. Das Endgerät entpackt APDU Kommando(s) und überträgt die Daten in API-Aufrufen an das Tokenreferenz-Register TRR, wo sie in HTTP-Codes umgesetzt werden.

Das Tokenreferenz-Register TRR verwaltet insbesondere den Speicherort für die Tokenreferenzen TR, hier als Datenbank 1 als Beispiel einer Speichereinheit im Tokenreferenz-Register TRR dargestellt. Stellvertretend ist in der Datenbank 1 das TR zum Token T der Teilnehmereinheit TE1 eingetragen.

Zudem kann das Tokenreferenz-Register TRR zumindest eine Verifiziereinheit 2 umfassen. Die Verifiziereinheit 2 des Tokenreferenz-Registers TRR verifiziert Registrieranfragen RA. Dabei kann eine syntaktische Korrektheit oder auch die korrekte Angabe eines Kommandos in der Registrieranfrage RA verifiziert werden. Auch eine Historie aus alten (vergangenen) Registrieranfragen RA bezüglich eines Tokens T kann dabei verifiziert werden. Die Trennung dieser Verifiziereinheit 2 von der Datenbank 1 verteilt die Aufgaben von Ablegen und Prüfen und erhöht die Geschwindigkeit im Tokenreferenz-Register TRR.

Zudem kann das Tokenreferenz-Register TRR eine Prüfeinheit umfassen (nicht explizit dargestellt), die prüft, ob mit dem Tokenwert v einer empfangenen Tokenreferenz TR ein Gesamt-Tokenwert Σ im Transaktionssystem TS verändert wird. Ist dies der Fall, dann wurde ein neuer Tokenwert v geschaffen oder ein existierender Tokenwert v vernichtet. Dies dürfen nur privilegierte Einheiten, wie einer Herausgeberinstanz TH, im Transaktionssystem TS. Wenn ein derartiges Verändern der Gesamtsumme der Tokenwerte durch eine Tokenreferenz TR einer Teilnehmereinheit TE erkannt wird, dann kann von einem Betrugsfall ausgegangen werden. Somit kann eine illegale Generierung von Tokenwerten v sehr leicht entdeckt und verhindert werden.

Die Prüfung des Gesamt-Tokenwerts durch die Prüfeinheit stellt ein weiteres Sicherheitskonzept im Transaktionssystem TS dar.

Eine Registrieranfrage RA ist bevorzugt mit dem privaten Teil r signiert. Durch die Signatur kann eine syntaktische Echtheit des Kommandos durch den Empfänger (TRR oder TE) einfach geprüft werden. Diese Prüfung erfolgt bevorzugt in der Datenbank 1 oder der Verifiziereinheit 2. Zudem kann eine Registeranfrage RA beispielsweise syntaktisch validiert werden durch Prüfen der Signatur und/oder der Tokenreferenz TR.

Auch wenn eine Signatur in einer Teilnehmereinheit TE geprüft werden kann, so wird damit nicht sichergestellt, dass keine Mehrfachausgabe des gleichen Tokens T versucht wurde. Daher ist das Registrieren im Tokenreferenz-Register TRR vorgesehen. Zudem wird durch die Teilnehmereinheiten TE eine sichere Hardwareplattform vorgehalten. Mit verfügbarer Verbindung zum Tokenreferenz-Register TRR werden die Tokenreferenzen TR übertragen und im Tokenreferenz-Register TRR kann der Mehrfachausgabe-Versuch entdeckt werden.

Wenn eine Tokenreferenz TR im Tokenreferenz-Register TRR noch nicht bekannt ist, wird sie hinzugefügt.

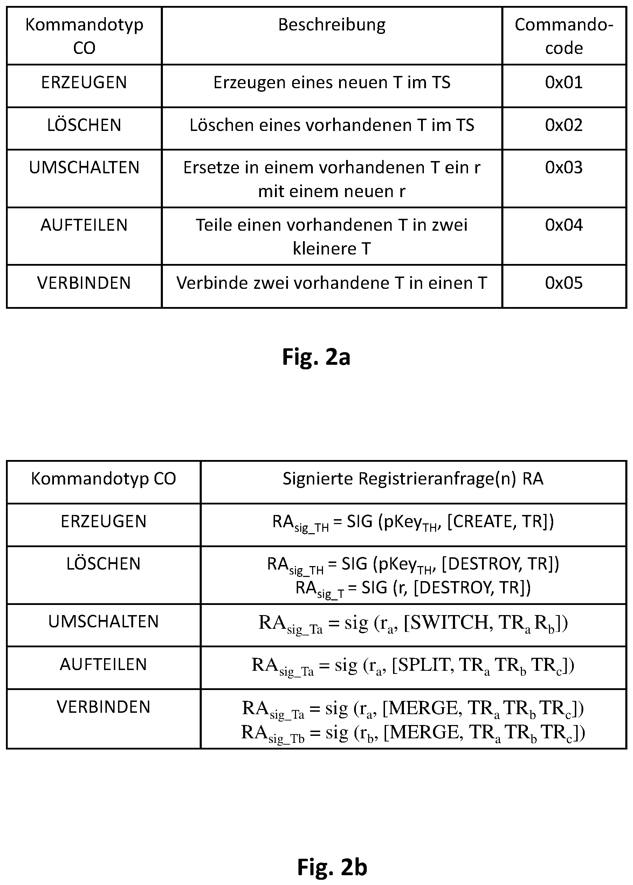

In Fig. 2a ist eine Übersicht von Kommandos CO gezeigt, die an einem Token T vorgenommen werden können. Die Kommandos CO können Modifikationen an einem vorhandenen Token T sein, beispielsweise "Umschalten (=Switch)", "Aufteilen (=Split)" oder "Verbinden (=Merge)". Die Kommandos CO können auch das Erzeugen (=Create) eines Tokens T oder das Löschen (Destroy) vorhandenen Token T betreffen. In Fig. 2a sind beispielhaft Kommandocodierungen angegeben (0x01 bis 0x05), die sodann Teil einer Registrieranfrage RA sein können.

In Fig. 2b ist eine Übersicht von Kommandos CO und deren signierte Registrieranfrage-Syntax RA gezeigt. Dabei werden pro Kommando CO Eingangs-Token T und Eingangs-Tokenreferenzen TR "verbraucht". Dabei werden pro Kommando CO Ausgangs-Token T Ausgangs-Tokenreferenzen TR "generiert".

Ein Kommando CO hat die grundlegende Struktur aus den folgenden drei Elementen: Kommandotyp, Eingangs-Tokenreferenz(en), Ausgangs-Tokenreferenz(en).

Zu beachten ist, dass für die Kommandos CO "Aufteilen", "Umschalten" und "Verbinden" die Differenz der Tokenwerte v aller beteiligten Token T bzw. Tokenreferenzen TR den Betrag "null" ergeben muss. Mit anderen Worten, diese Kommandos CO "Aufteilen", "Umschalten" und "Verbinden" erzeugen keine Tokenwerte v und vernichten keine Tokenwerte v. Dies kann am Kommandotyp CO selbst oder auch von der Prüfeinheit des Tokenreferenz-Register TRR nachgeprüft werden und kann ein Prüfkriterium für eine Registrieranfrage RA sein.

Zu beachten ist auch, dass nur für die Kommandos CO "Erzeugen" und "Löschen" eine Differenz der Tokenwerte v des beteiligten Tokens T bzw. Tokenreferenzen TR erlaubt ist, aber nur in Höhe des Tokenwerts v des Tokens T und nicht darüber hinaus.

Jede Registrieranfrage RA kann signiert werden, um prüfen zu können, dass der Sender der Tokenreferenz TR auch im Besitz des dazugehörigen Tokens T ist. Als Signatur kann ein ECDSA-Schema angewendet werden. Die Registrieranfrage RA wird bevorzugt mit dem privaten Teil r des Tokens T signiert. Für signierte Registrieranfragen RA_{sig} der Kommandotypen CO "Erzeugen" und "Löschen" kann eine weitere Signatur eines Tokenherausgebers verlangt werden, um sicherzustellen, dass diese Kommandos von einer privilegierten Einheit des Transaktionssystems TS generiert worden sind.

In Fig. 3 ist ein Ausführungsbeispiel eines Ablaufdiagrams eines erfindungsgemäßen Verfahrens zum Übertragen eines Tokens T zwischen einer TE1 und einer TE2 auf Basis eines Umschalten-Kommandos eines vorhandenen Tokens Tₐ gezeigt. Zudem ist die dazu benötigte signierte Registrieranfrage RA_{sig_Ta} und eine Registrierbestätigung RB mit Kommandostruktur dargestellt.

In der TE1 ist ein Token Tₐ vorhanden. Der Token Tₐ hat einen Tokenwert vₐ und den privaten Teil r des tokenindividuellen Schlüsselpaars. Die dazugehörige Tokenreferenz TRₐ ist im Tokenreferenz-Register TRR auf die TE1 registriert. Zwischen TE1 und TE2 soll ein Token T_{b} mit dem Tokenwert v_{b} übertragen werden.

Die TE1 sendet dazu eine Übertragungsinformation Ü oder eine Tokeninformation (beispielsweise den Tokenwert v_{b} selbst) an die TE2. Diese Tokeninformation kann eine Absichtserklärung von TE1 an TE2 sein, den Token T_{b} - beispielsweise im Rahmen einer Bezahltransaktion - zu übertragen. Daraufhin erzeugt TE2 eine neue Zufallszahl r_{b}, die als privater Teil (das Geheimnis) eines neuen kryptografischen tokenindividuellen Schlüsselpaars dient. Durch Anwenden einer kryptografischen Einwegfunktion (siehe Fig. 1) wird der öffentliche Teil R_{b} des Schlüsselpaars in der TE2 erzeugt.

Anschließend sendet TE2 den öffentlichen Teil R_{b} des Schlüsselpaars an TE1 zurück. Wenn TE2 bereits in Kenntnis des Tokenwerts v_{b} ist (bspw. der im Rahmen der Bezahltransaktion zu erwartende Tokenwert oder die von TE1 bereitgestellt Tokeninformation ist der Tokenwert v_{b}), kann TE2 auch die Tokenreferenz TR_{b} an TE1 senden.

In der TE1 wird nun der Token Tₐ auf den zu übertragenden Token T_{b} umgeschaltet. Anschließend erfolgt das Erstellen und Senden einer Registrieranfrage RA_{sigTa} von der TE1 an das TRR. Die Registrieranfrage RA enthält sodann das Kommando "SWITCH" oder einen entsprechenden Kommandocode gemäß Fig. 2a, die Eingangs-Tokenreferenz TRₐ und den öffentlichen Teil R_{b} bzw. die Ausgangs-Tokenreferenz TR₃. Diese Registrieranfrage RA wird mit der Zufallszahl rₐ des Tokens Tₐ signiert. Die signierte Registrieranfrage RA_{sig_Ta} wird von der Teilnehmereinheit TE1 an das Tokenreferenz-Register TRR gesendet. Dort wird die Signatur geprüft. Zudem wird der Tokenwert vₐ mit dem Tokenwert v_{b} verglichen. Wenn vₐ = v_{b} gilt und die Signaturprüfung erfolgreich ist, dann wird die Tokenreferenz TRₐ in dem Tokenreferenz-Register TRR gelöscht oder als gelöscht markiert und die Tokenreferenz TR_{b} in das Tokenreferenz-Register TRR eingetragen. Ab diesem Zeitpunkt ist der Token T_{b} auf die TE2 registriert.

Der Erfolg der Registrierung wird von dem TRR an die TE1 als Registrierbestätigung RB angezeigt. Die Registrierbestätigung umfasst die Tokenreferenz TR_{b}. Zur Absicherung des Verfahrens kann diese Registrierbestätigung mit einer Signatur des TRR versehen sein.

Die Registrierbestätigung RB kann vom TE1 an das TE2 gesendet werden, um TE2 den Erfolg der Registrierung mitzuteilen. Sodann kann TE2 nochmals die Registrierbestätigung RB validieren. Damit gilt der Token T_{b} mit dem Tokenwert v_{b} und dem privaten Teil r_{b} von TE1 an TE2 übertragen, ohne dass der Token mit beiden Tokenelementen von TE1 an TE2 übertragen werden musste.

Übertragen wird demnach der erzeugte öffentliche Teil R_{b} an TE1. TE1 übernimmt die Registrierung durch ein Umschaltkommando "SWITCH". Eine Bestätigung RB wird ggf. mit Signatur des TRR Sig (v_{b}, R_{b}) für den erzeugten öffentliche Teil R_{b} und den Tokenwert v_{b} zurückgesendet. Ein abschließendes Umschalten in der TE2 wird damit überflüssig, das Verfahren ist demnach weniger komplex.

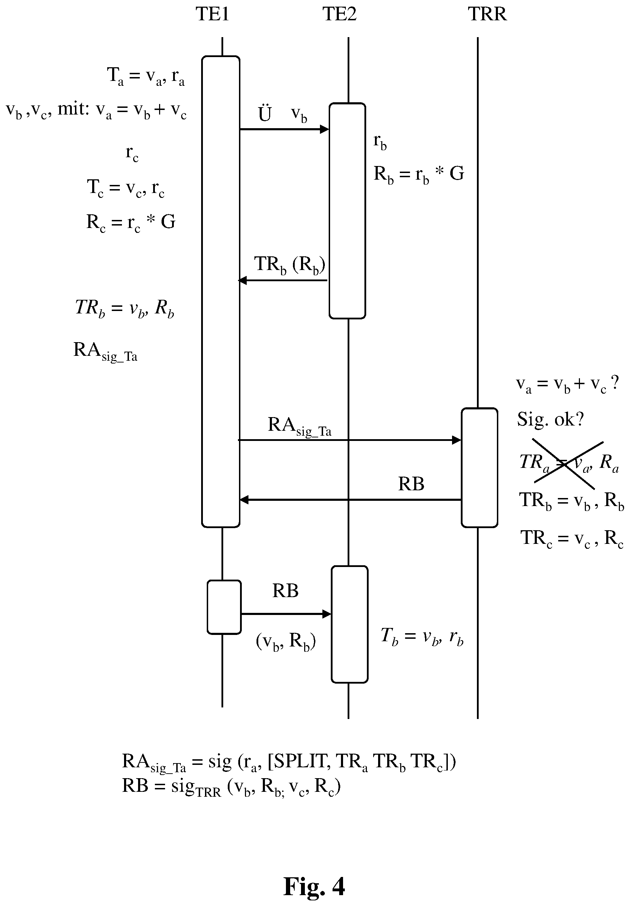

In der Fig. 4 ist ein Ausführungsbeispiel eines Ablaufdiagrams eines erfindungsgemäßen Verfahrens zum Übertragen eines Tokens T_{b} auf Basis eines Aufteilens eines Tokens Tₐ gezeigt. Zudem ist die dazu benötigte signierte Registrieranfrage RA_{sig_Ta} und eine Registrierbestätigung RB mit Kommandostruktur dargestellt.

In der TE1 ist ein Token Tₐ vorhanden. Der Token Tₐ hat einen Tokenwert vₐ und den privaten Teil r des tokenindividuellen Schlüsselpaars. Die dazugehörige Tokenreferenz TRₐ ist im Tokenreferenz-Register TRR auf die TE1 registriert. Zwischen TE1 und TE2 soll ein Token T_{b} mit dem Tokenwert v_{b} übertragen werden.

In der TE1 wird der Tokenwert vₐ in einen ersten Tokenteilwert v_{b} (an TE2 zu übertragender Tokenwert) und einen weiteren Tokenteilwert v_{c} aufgeteilt. Die Summe aus Tokenwert v_{b} und Tokenwert v_{c} muss den Tokenwert vₐ ergeben. Damit wird sichergestellt, dass kein neuer Tokenwert v erzeugt wird oder ein Tokenwert v vernichtet wird.

Zur Übertragung des Tokens T_{b} sendet TE1 eine Tokeninformation (beispielsweise den Tokenwert v_{b} selbst) an die TE2. Diese Tokeninformation ist eine Absichtserklärung von TE1 an TE2, den Token T_{b} - beispielsweise im Rahmen einer Bezahltransaktion - zu übertragen. Daraufhin erzeugt TE2 eine neue Zufallszahl r_{b}, die als privater Teil (das Geheimnis) eines neuen kryptografischen tokenindividuellen Schlüsselpaars dient. Durch Anwenden einer kryptografischen Einwegfunktion (siehe Fig. 1) wird der öffentliche Teil R_{b} des Schlüsselpaars in der TE2 erzeugt.

Anschließend sendet TE2 den öffentlichen Teil R_{b} des Schlüsselpaars an TE1 zurück. Wenn TE2 bereits in Kenntnis des Tokenwerts v_{b} ist (bspw. der im Rahmen der Bezahltransaktion zu erwartende Tokenwert oder die von TE1 bereitgestellt Tokeninformation ist der Tokenwert v_{b}), kann TE2 auch die Tokenreferenz TR_{b} an TE1 senden.

In der TE1 wird parallel dazu oder anschließend oder zuvor eine neue Zufallszahl r_{c} erzeugt, die als privater Teil (das Geheimnis) eines weiteren kryptografischen tokenindividuellen Schlüsselpaars dient. Durch Anwenden einer kryptografischen Einwegfunktion (siehe Fig. 1) wird der öffentliche Teil R_{c} des Schlüsselpaars in der TE1 erzeugt.

Nun erfolgt das Erstellen und Senden einer Registrieranfrage RA von TE1 an das TRR. Dazu werden von der TE1 die Tokenreferenzen TR_{b} und TR_{c} verwendet. Die Registrieranfrage RA enthält sodann das Kommando "SPLIT" bzw. den dafür in Fig. 2a gezeigten Kommandocode, die Eingangs-Tokenreferenz TRₐ und die Ausgangs-Tokenreferenzen TR_{b} und TR_{c}. Diese Registrieranfrage RA wird mit der Zufallszahl rₐ des Tokens Tₐ signiert. Die signierte Registrieranfrage RA_{sig_Ta} wird vom TE1 an das Tokenreferenz-Register TRR gesendet. Dort wird die Signatur geprüft und die Summe von v_{b} und v_{c} gebildet und mit dem Tokenwert vₐ verglichen. Wenn vₐ = v_{b} + v_{c} gilt und die Signaturprüfung erfolgreich ist, dann wird die Tokenreferenz TRₐ in dem Tokenreferenz-Register TRR gelöscht oder als gelöscht markiert und die Tokenreferenzen TR_{b} und TR_{c} in das Tokenreferenz-Register TRR eingetragen.

In einer Ausgestaltung wird in der Verifiziereinheit 2 des TRR die Tokenwerte-Differenz der Eingangs-Tokenreferenz TRₐ und der Ausgangs-Tokenreferenzen TR_{b} und TR_{c} gebildet und geprüft, ob diese Differenz null ist. Ist die Differenz nicht null, so wurde in unerlaubter Weise ein Tokenwert v generiert oder vernichtet. Zudem kann auch ein Gesamt-Tokenwert des Transaktionssystems TS in der Prüfeinheit des Tokenreferenz-Register TRR vor oder nach der Registrierung der Tokenreferenzen TR_{b} und TR_{c} geprüft werden. Der Gesamt-Tokenwert in der Prüfeinheit darf sich nicht verändert haben und muss dem Wert vor der Verarbeitung der Registrieranfrage im Tokenreferenz-Register TRR entsprechen.

Ab diesem Zeitpunkt ist der Token T_{b} auf die TE2 registriert und der Token T_{c} auf die TE1 registriert.

Der Erfolg der Registrierung wird von dem TRR an die TE1 als Registrierbestätigung RB angezeigt. Die Registrierbestätigung umfasst die Tokenreferenzen TR_{b} und TR_{c}. Zur Absicherung des Verfahrens kann diese Registrierbestätigung mit einer Signatur des TRR versehen sein.

Die Registrierbestätigung RB kann vom TE1 an das TE2 gesendet werden, um TE2 den Erfolg der Registrierung mitzuteilen. Sodann kann TE2 nochmals die Registrierbestätigung RB validieren. Damit gilt der Token T_{b} mit dem Tokenwert v_{b} und dem privaten Teil r_{b} von TE1 an TE2 übertragen, ohne dass der Token mit beiden Tokenelementen von TE1 an TE2 übertragen werden musste.

Übertragen wird also auch hier nur der erzeugte öffentliche Teil R_{b} von TE2 an TE1. TE1 übernimmt die Registrierung durch ein Aufteilenkommando "SPLIT". Eine Bestätigung RB wird ggf. mit Signatur des TRR Sig (v_{b}, R_{b}) für den erzeugten öffentliche Teil R_{b} und den Tokenwert v_{b} zurückgesendet. Ein abschließendes Umschalten in der TE2 wird damit überflüssig, das Verfahren ist demnach weniger komplex.

Figürlich nicht dargestellt ist die zusätzliche Möglichkeit, dass in der TE1 ein vorhandener Token Tₐ mit einem weiteren Token T_{d} verbunden wird und der verbundene Token als zu übertragender Token T_{b} im TRR registriert wird.

Dabei wird in einer TE2 nach Erhalt der Tokeninformation die Zufallszahl r_{b} erzeugt. Basierend darauf wird dann ein öffentlicher Teil R_{b} erzeugt. Der öffentliche Teil R_{b} oder die Tokenreferenz TR_{b} werden von TE2 an TE1 gesendet. In TE1 erfolgt das Bilden einer Summe aus den Tokenwerten vₐ und v_{d} zum Tokenwert v_{b} basierend auf den Eingangs-Token Tₐ und T_{d}. Eine Registrieranfrage RA enthält sodann das Kommando "MERGE" bzw. den in Fig. 2a gelisteten Kommandocode, die zwei Eingangs-Tokenreferenzen TRₐ und TR_{d} sowie die Ausgangs-Tokenreferenz TR₃. Diese Registrieranfrage RA wird einmal mit der Zufallszahl rₐ des Tokens Tₐ signiert, um eine erste signierte Registrieranfrage RA_{sig_Ta} zu erhalten. Diese Registrieranfrage wird zudem mit der Zufallszahl r_{d} des Tokens T_{d} signiert, um eine zweite signierte Registrieranfrage RA_{sig_Td} zu erhalten. Beide signierte Registrieranfragen RA_{sig_Ta} und RA_{sig_Td} werden von der Teilnehmereinheit TE1 an das Tokenreferenz-Register TRR gesendet. Dort werden jeweils die Signaturen der Registrieranfragen RA_{sig_Ta} und RA_{sig_Td} geprüft. Zudem wird die Summe von den Tokenwerten vₐ und v_{d} gebildet und mit dem Tokenwert v_{b} verglichen. Wenn v_{b} = vₐ + v_{d} gilt und beide Signaturprüfungen erfolgreich sind, dann werden TRₐ und TR_{d} in dem Tokenreferenz-Register TRR gelöscht oder als gelöscht markiert und die Tokenreferenz TR_{b} in das Tokenreferenz-Register TRR eingetragen. Ab diesem Zeitpunkt ist der Token T_{b} auf die TE2 registriert und der Token Tₐ und der Token T_{d} der TE1 sind ungültig.

Figürlich ebenfalls nicht dargestellt ist die Möglichkeit. dass nicht zwangsweise TE1 die Registrieranfrage RA an das TRR stellen muss. So kann - mangels einer Kommunikationsverbindung von TE1 mit TRR auch die TE2 eine Kommunikationsverbindung mit dem TRR aufbauen und die Kommunikation weiterleiteten, beispielsweise im Rahmen einer VPN oder anderen Tunnelkommunikation.

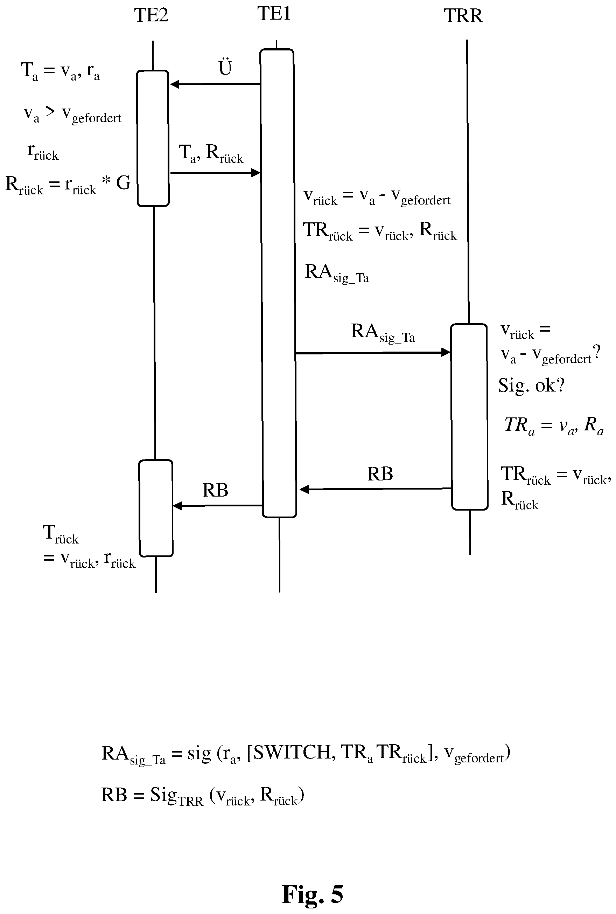

In der Fig. 5 ist ein Ausführungsbeispiel eines Ablaufdiagrams eines erfindungsgemäßen Verfahrens zum Übertragen eines Tokens auf Basis einer Rückgeldtransaktion gezeigt. Zudem ist die dazu benötigte signierte Registrieranfrage RA_{sig_Ta} und eine Registrierbestätigung RB mit Kommandostruktur dargestellt Das Beispiel ist anhand eines Umschalten-Kommandos (gemäß Fig. 3) erläutert.

In der TE2 ist ein Token Tₐ vorhanden. Der Token Tₐ hat einen Tokenwert vₐ und den privaten Teil r des tokenindividuellen Schlüsselpaars. Die dazugehörige Tokenreferenz TRₐ ist im Tokenreferenz-Register TRR auf die TE2 registriert. Zwischen TE2 und TE1 soll ein Token T_{gefordert} mit dem Tokenwert v_{gefordert} übertragen werden. Der Tokenwert v_{gefordert} ist kleiner als der Tokenwert vₐ.

TE2 erzeugt eine neue Zufallszahl r_{rück}, die als privater Teil (das Geheimnis) eines neuen kryptografischen tokenindividuellen Schlüsselpaars dient. Durch Anwenden einer kryptografischen Einwegfunktion (siehe Fig. 1) wird der öffentliche Teil R_{rück} des Schlüsselpaars in der TE2 erzeugt.

Anstelle den Token Tₐ aufzuteilen, wird gemäß Fig. 5 der Token Tₐ und der öffentliche Teil R_{rück} an die TE1 gesendet.

In der TE1 kann anhand des Tokenwerts vₐ und im Wissen um den geforderten Tokenwert v_{gefordert} (als Tokeninformation) auf die Höhe eines Tokenwerts v_{rück} als Rückgeld (Wechselgeld) mittels einfacher Differenzbildung geschlossen werden. Alternativ stellt TE2 die Information über den Tokenwert v_{rück} direkt an TE1 bereit.

In TE1 wird dann die Tokenreferenz TR_{rück} gebildet durch Verketten von v_{rück} mit R_{rück}.

Anschließend erfolgt das Erstellen und Senden einer Registrieranfrage RA_{sigTa} von der TE1 an das TRR. Die Registrieranfrage RA enthält sodann das Kommando "SWITCH" oder einen entsprechenden Kommandocode gemäß Fig. 2a, die Eingangs-Tokenreferenz TRₐ, den öffentlichen Teil R_{b} bzw. die Ausgangs-Tokenreferenz TR_{b} und den Tokenwert v_{gefordert}. Diese Registrieranfrage RA wird mit der Zufallszahl rₐ des Tokens Tₐ signiert. Die signierte Registrieranfrage RA_{sig_Ta} wird von der Teilnehmereinheit TE2 an das Tokenreferenz-Register TRR gesendet. Dort wird die Signatur geprüft. Zudem wird der Tokenwert v_{rück} mit der Summe aus vₐ und v_{rück} verglichen. Wenn v_{rück} = vₐ - v_{gefordert} gilt und die Signaturprüfung erfolgreich ist, dann wird die Tokenreferenz TRₐ in dem Tokenreferenz-Register TRR von TE2 auf TE1 umregistriert und die Tokenreferenz TR_{rück} in das Tokenreferenz-Register TRR eingetragen. Ab diesem Zeitpunkt ist der Token T_{rück} auf die TE2 registriert.

Der Erfolg der Registrierung wird von dem TRR an die TE1 als Registrierbestätigung RB angezeigt. Die Registrierbestätigung umfasst die Tokenreferenz TR_{rück}. Zur Absicherung des Verfahrens kann diese Registrierbestätigung mit einer Signatur des TRR versehen sein.

Die Registrierbestätigung RB kann vom TE1 an das TE2 gesendet werden, um TE2 den Erfolg der Registrierung mitzuteilen. Sodann kann TE2 nochmals die Registrierbestätigung RB validieren. Damit gilt der Token T_{rück} mit dem Tokenwert v_{rück} und dem privaten Teil r_{rück} von TE1 an TE2 übertragen, ohne dass der Token T_{rück} mit beiden Tokenelementen von TE1 an TE2 übertragen werden musste.

Übertragen wird demnach der erzeugte öffentliche Teil R_{rück} an TE1. TE1 übernimmt die Registrierung durch ein Umschaltkommando "SWITCH". Eine Bestätigung RB wird ggf. mit Signatur des TRR Sig (v_{rück}, R_{rück}) für den erzeugten öffentliche Teil R_{rück} und den Tokenwert v_{rück} zurückgesendet. Ein abschließendes Umschalten in der TE2 wird damit überflüssig, das Verfahren ist demnach weniger komplex.

Somit kann erfindungsgemäß eine Kombination aus Bezahlung und Rückgeld mit nur einem Umschaltkommando ausgeführt werden. Das Rückgeld wird von TE1 gleich (mit) registriert und eine zusätzliche Registrierung durch TE2 kann entfallen.

Die Fig. 6 zeigt ein Ausführungsbeispiel eines Ablaufdiagrams eines erfindungsgemäßen Verfahrens zum Übertragen eines Tokens ohne Registrieren des Tokens auf Basis eines Umschaltens eines Tokens. Das Verfahren gleicht in weiten Teilen dem Verfahren in der Fig. 3, auf die Beschreibung der identischen Verfahrensschritte wird daher verzichtet. Der Unterschied zu Fig. 3 besteht darin, dass in der Fig. 6 kein TRR benötigt wird, um den zu übertragenden Token zu registrieren. Anstelle einer Registrieranfrage RA (siehe Fig. 3) erzeugt die TE1 einen Beweisdatensatz PR (siehe auch Fig. 1 mit Erläuterungen). Der Beweisdatensatz PR entspricht in Struktur und Aufbau der Registrieranfrage RA. Es fehlt im Ablauf der Fig. 6 demnach die Verifizierung des Umschaltkommandos durch das TRR, dafür braucht TE2 aber per Transaktionssystemvoraussetzung kein Umschaltkommando mehr durchführen. Dies reduziert den Aufwand im Verfahren.

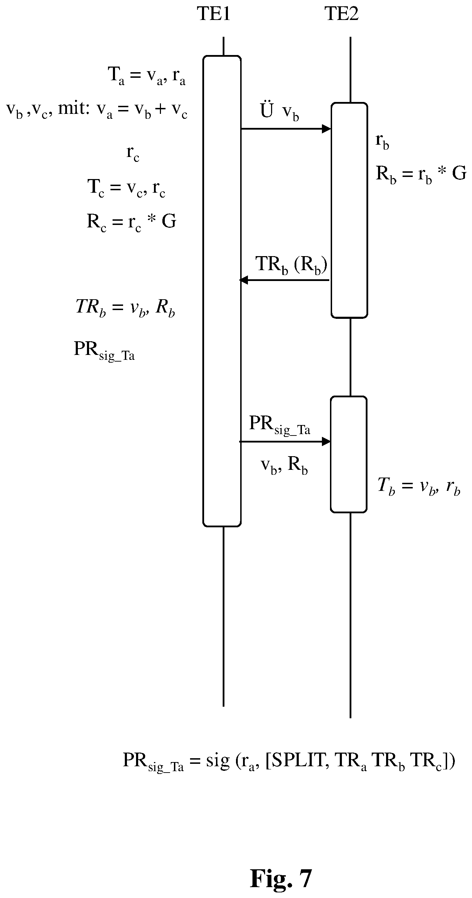

Die Fig. 7 zeigt ein Ausführungsbeispiel eines Ablaufdiagrams eines erfindungsgemäßen Verfahrens zum Übertragen eines Tokens ohne Registrieren des Tokens auf Basis eines Aufteilens eines Tokens. Das Verfahren gleicht in weiten Teilen dem Verfahren in der Fig. 4, auf die Beschreibung der identischen Verfahrensschritte wird daher verzichtet. Der Unterschied zu Fig. 4 besteht darin, dass in der Fig. 7 kein TRR benötigt wird, um den zu übertragenden Token zu registrieren. Anstelle einer Registrieranfrage RA (siehe Fig. 4) erzeugt die TE1 einen Beweisdatensatz PR (siehe auch Fig. 1 mit Erläuterungen). Der Beweisdatensatz PR entspricht in Struktur und Aufbau der Registrieranfrage RA. Es fehlt im Ablauf der Fig. 7 demnach die Verifizierung des Umschaltkommandos durch das TRR, dafür braucht TE1 aber per Transaktionssystemvoraussetzung kein Aufteilen-Kommando mehr durchführen. Dies reduziert den Aufwand im Verfahren.

### BEZUGSZEICHENLISTE

CO Kommando
PKey_{TH} öffentlicher Teil des Tokenherausgeber-Schlüsselpaars
pKey_{TH} privater Teil des Tokenherausgeber-Schlüsselpaars
R öffentlicher Teil des tokenindividuellen Schlüsselpaars
r privater Teil des tokenindividuellen Schlüsselpaars
RA Registrierungsanfrage
PR Beweisdatensatz
RA_{sig_T} Registrierungsanfrage signiert mit privatem Teil des tokenindividuellen Schlüsselpaars
RA_{sig_TH} Registrierungsanfrage signiert mit privatem Teil des Tokenherausgeber-Schlüsselpaars
PR_{sig_T} Beweisdatensatz signiert mit privatem Teil des tokenindividuellen Schlüsselpaars
T Token
TE Teilnehmereinheit
TE-Schicht Direkttransaktionsschicht
TRR-Schicht Registerschicht
TR Tokenreferenz
TRR Tokenreferenz-Register
   1 Datenbank, Speichereinheit
   2 Verifiziereinheit
TS Transaktionssystem
TW Tokenwert
a-i Indizes für verschiedene Token und Tokenreferenzen
v Tokenwert
Ü Übertragungsinformation

## Patentansprüche

1. Ein Verfahren zum Übertragen von Token (T_{b}; T_{rück}) in einem elektronischen Transaktionssystem (TS), mit den Verfahrensschritten:
- Empfangen einer Übertragungsinformation (Ü) von einer ersten Teilnehmereinheit (TE1) in einer zweiten Teilnehmereinheit (TE2);
- Erzeugen eines tokenindividuellen kryptografischen Schlüsselpaars (r_{b}, R_{b}; r_{ück}, R_{rück}) für einen zu übertragenden Token (T), wobei ein öffentlicher Teil (R_{b}; R_{rück}) des tokenindividuellen kryptografischen Schlüsselpaars (r_{b}, R_{b}; r_{ück}, R_{rück}) durch Anwenden einer kryptografischen Einwegfunktion auf einen erzeugten privaten Teil (r_{b}; r_{rück}) des tokenindividuellen Schlüsselpaars (r_{b}, R_{b}; r_{ück}, R_{rück}) erhalten wird, wobei der private Teil (r_{b}; r_{rück}) ein Tokenelement des zu übertragenden Tokens (T_{b}; T_{rück}) ist;
- Erzeugen einer Registrieranfrage (RA) in der ersten Teilnehmereinheit (TE1) für ein Tokenreferenz-Register (TRR) des Transaktionssystems (TS) zumindest umfassend eine dem zu übertragenden Token (T_{b}; T_{rück}) eindeutig zugeordnete Tokenreferenz (TR_{b}; TR_{Rück}) als eine zu registrierende Tokenreferenz und eine einem Token (Tₐ; T_{c}) der ersten Teilnehmereinheit (TE1) zugeordnete Tokenreferenz (TRₐ; TR_{c}) als bereits registrierte Tokenreferenz (TRₐ; TR_{c});
**dadurch gekennzeichnet, dass**
das Erzeugen des tokenindividuellen kryptografischen Schlüsselpaars in der zweiten Teilnehmereinheit (TE2) erfolgt;
- Senden des erzeugten öffentlichen Teils (R_{b}; R_{rück}) des tokenindividuellen Schlüsselpaars (r_{b}, R_{b}; r_{ück}, R_{rück}) von der zweiten Teilnehmereinheit (TE2) an die erste Teilnehmereinheit (TE1);
die dem zu übertragenden Token (T_{b}; T_{rück}) eindeutig zugeordnete Tokenreferenz (TR_{b}; TR_{Rück}) zumindest einen Tokenwert (v_{b}; v_{rück}) des Tokens (T_{b}; T_{rück}) und den erzeugten öffentlichen Teil (R_{b}; R_{rück}) des tokenindividuellen Schlüsselpaars (r_{b}, R_{b}; r_{ück}, R_{rück}) als Tokenreferenz-Elemente aufweist; und
- Senden von der ersten Teilnehmereinheit (TE1) an die zweite Teilnehmereinheit (TE2),
einer Registrierbestätigung (RB) des Tokenreferenzregisters (TRR) für eine erfolgte Registrierung der zu registrierenden Tokenreferenz (TR_{b}; TR_{Rück}), oder
der Registrieranfrage (RA) zum Registrieren der zu registrierenden Tokenreferenz (TR_{b}; TR_{Rück}) in dem Tokenreferenz-Register (TRR).

2. Das Verfahren nach Anspruch 1, wobei die Übertragungsinformation (Ü) eine Tokenübertragen-Absichtserklärung zur Übertragung des zu übertragenden Tokens (T_{b}; T_{rück}) von der ersten Teilnehmereinheit (TE1) an die zweite Teilnehmereinheit (TE2) ist.

3. Das Verfahren nach Anspruch 1 oder 2, wobei die Übertragungsinformation (Ü) der Tokenwert (v_{b}; v_{rück}) des zu übertragenden Tokens (T_{b}; T_{rück}) ist.

4. Das Verfahren nach einem der vorhergehenden Ansprüche, wobei vor dem Senden der Registrierbestätigung (RB) die Registrieranfrage (RA) von der ersten Teilnehmereinheit (TE1) an das Tokenreferenz-Register (TRR) gesendet wird und wobei bevorzugt die Registrierbestätigung (RB) von dem Tokenreferenz-Register (TRR) an die erste Teilnehmereinheit (TE1) gesendet wird.

5. Das Verfahren nach einem der vorhergehenden Ansprüche, wobei die erste Teilnehmereinheit (TE1) nach Erhalten der Registrierbestätigung (RB), den Token (T_{b}) aufweisend den Tokenwert (v_{b}) und den öffentlichen Teil (R_{b}) des tokenindividuellen Schlüsselpaars (r_{b}, R_{b}) an die zweite Teilnehmereinheit (TE2) überträgt.

6. Das Verfahren nach einem der vorhergehenden Ansprüche 1 bis 3, wobei die Registrieranfrage (RA) in Abhängigkeit von einem Vorhandensein einer Kommunikationsverbindung mit dem Tokenreferenz-Register (TRR) entweder von der ersten Teilnehmereinheit (TE1) oder von der zweiten Teilnehmereinheit (TE2) an das Tokenreferenz-Register (TRR) gesendet wird und wobei bevorzugt eine Registrierbestätigung (RB) von dem Tokenreferenz-Register (TRR) an die die Registrieranfrage (RA) an das Tokenreferenz-Register (TRR) sendende Teilnehmereinheit (TE1, TE2) gesendet wird.

7. Das Verfahren nach Anspruch 6,
wobei die erste Teilnehmereinheit (TE1) eine Kommunikationsverbindung zwischen der zweiten Teilnehmereinheit (TE2) und dem Tokenreferenz-Register (TRR) bereitstellt, wenn die Registrieranfrage (RA) von der zweiten Teilnehmereinheit (TE2) an das Tokenreferenz-Register (TRR) zu senden ist, die zweite Teilnehmereinheit (TE2) aber keine Kommunikationsverbindung zum Tokenreferenz-Register (TRR) aufweist; oder
wobei die zweite Teilnehmereinheit (TE2) eine Kommunikationsverbindung zwischen der ersten Teilnehmereinheit (TE1) und dem Tokenreferenz-Register (TRR) bereitstellt, wenn die Registrieranfrage (RA) von der ersten Teilnehmereinheit (TE1) an das Tokenreferenz-Register (TRR) zu senden ist, die erste Teilnehmereinheit (TE1) aber keine Kommunikationsverbindung zum Tokenreferenz-Register (TRR) aufweist.

8. Das Verfahren nach einem der vorhergehenden Ansprüche 1, 2 oder 3, wobei die Übertragungsinformation indirekt durch ein Übertragen des Tokens (Tₐ) der ersten Teilnehmereinheit (TE1) mit einem Tokenwert (vₐ) größer einem geforderten Tokenwert (v_{gefordert}) empfangen wird.

9. Das Verfahren nach einem der vorhergehenden Ansprüche 1, 2, 3 oder 8, wobei die Registrieranfrage (RA) von der zweiten Teilnehmereinheit (TE2) an das Tokenreferenz-Register (TRR) gesendet wird, wobei die Registrieranfrage (RA) auch den geforderten Tokenwert (v_{gefordert}) umfasst und wobei bevorzugt die Registrierbestätigung (RB) von dem Tokenreferenz-Register (TRR) an die zweite Teilnehmereinheit (TE2) gesendet wird.

10. Das Verfahren nach einem der vorhergehenden Ansprüche 1, 2, 3, 8 oder 9, wobei nach Erhalten der Registrierbestätigung (RB), der Token (T_{rück}) aufweisend den Tokenwert (v_{rück}) und den öffentlichen Teil (R_{rück}) des tokenindividuellen Schlüsselpaars (r_{rück}, R_{rück}) als von der zweiten Teilnehmereinheit (TE2) an die erste Teilnehmereinheit (TE1) übertragen gilt.

11. Das Verfahren nach einem der vorhergehenden Ansprüche, wobei zum Registrieren im Tokenreferenzregister (TRR) verifiziert wird, ob die zumindest eine Tokenreferenz (TR_{b}) der empfangenen Registrieranfrage (RA) in dem Tokenreferenz-Register (TRR) gespeichert ist, und Speichern der zumindest einen Tokenreferenz (TR_{b}) in einer Speichereinheit des Tokenreferenz-Registers (TRR) zum Registrieren des dieser Tokenreferenz (TR_{b}) eindeutig zugeordneten Tokens (T_{b}) im Transaktionssystem (TS), wenn im Verifizieren-Schritt festgestellt wird, dass die zumindest eine Tokenreferenz (TR_{b}) der empfangenen Registeranfrage (RA) nicht im Tokenreferenz-Register (TRR) gespeichert ist.

12. Das Verfahren nach einem der vorhergehenden Ansprüche, wobei der zu übertragende Token (T_{b}) durch einen Aufteilen-Schritt des Tokens (Tₐ) der ersten Teilnehmereinheit (TE1) erhalten wird, wobei zum Aufteilen des Tokens (Tₐ) der ersten Teilnehmereinheit (TE1) die folgenden Verfahrensschritte durchgeführt werden:
- Aufteilen des Tokenwerts (vₐ) des Tokens (Tₐ) der ersten Teilnehmereinheit (TE1) in einen ersten Tokenteilwert (v_{b}) und in einen zweiten Tokenteilwert (v_{c}), wobei die Summe aus dem ersten Tokenteilwert (v_{b}) und dem zweiten Tokenteilwert (v_{c}) dem Tokenwert (vₐ) des aufzuteilenden Tokens (Tₐ) entspricht;
- Empfangen der Tokenreferenz (TR_{b}) für den zu übertragenden Token (T_{b}) von der zweiten Teilnehmereinheit (TE2) aufweisend den erzeugten öffentlichen Teil (R_{b}) des tokenindividuellen Schlüsselpaars (r_{b}, R_{b}) des zu übertragenden Tokens (T_{b});
- Erzeugen einer Tokenreferenz (TR_{c}) für einen aufgeteilten Token (T_{c}) in der ersten Teilnehmereinheit (TE1) aufweisend den zweiten Tokenteilwert (v_{c}) und einen erzeugten öffentlichen Teil (R_{c}) eines tokenindividuellen Schlüsselpaars (r_{c}, R_{c}) des zweiten aufgeteilten Tokens (T_{c}); und
- Erzeugen der Registrieranfrage (RA) umfassend die Tokenreferenz (TRₐ) des Tokens (Tₐ) der ersten Teilnehmereinheit (TE1), die Tokenreferenz (TR_{b}) für den zu übertragenden Token (T_{b}) und die Tokenreferenz (TR_{c}) für den aufgeteilten Token (T_{c}).

13. Das Verfahren nach einem der vorhergehenden Ansprüche 1 bis 11, wobei der zu übertragende Token (T_{b}) durch einen Umschalten-Schritt des Tokens (Tₐ) der ersten Teilnehmereinheit (TE1) erhalten wird, wobei zum Umschalten des Tokens (Tₐ) der ersten Teilnehmereinheit (TE1) die folgenden Verfahrensschritte durchgeführt werden:
- Empfangen der Tokenreferenz (TR_{b}) für den zu übertragenden Token (T_{b}) von der zweiten Teilnehmereinheit (TE2) aufweisend den erzeugten öffentlichen Teil (R_{b}) des tokenindividuellen Schlüsselpaars (r_{b}, R_{b}) des zu übertragenden Tokens (T_{b});
- Erzeugen der Registrieranfrage (RA) umfassend die Tokenreferenz (TRₐ) des Tokens (Tₐ) der ersten Teilnehmereinheit (TE1) und die Tokenreferenz (TR_{b}) für den zu übertragenden Token (T_{b}).

14. Ein Transaktionssystem (TS) aufweisend eine Vielzahl von Teilnehmereinheiten (TE1, TE2), jeweils eingerichtet zum Übertragen von Token (T) gemäß einem der vorhergehenden Ansprüche.

15. Das Transaktionssystem (TS) nach Anspruch 14, umfassend:
- eine erste Teilnehmereinheit (TE1), eingerichtet zum Senden einer Übertragungsinformation (Ü) für einen zu übertragenden Token (T_{b}; T_{rück}) an eine zweite Teilnehmereinheit (TE2);
- eine zweite Teilnehmereinheit (TE2), eingerichtet zum Erzeugen eines tokenindividuellen kryptografischen Schlüsselpaars (r_{b}, R_{b}; r_{ück}, R_{rück}) für den zu übertragenden Token (T), wobei ein öffentlicher Teil (R_{b}; R_{rück}) des tokenindividuellen kryptografischen Schlüsselpaars (r_{b}, R_{b}; r_{ück}, R_{rück}) durch Anwenden einer kryptografischen Einwegfunktion auf einen erzeugten privaten Teil (r_{b}; r_{rück}) des tokenindividuellen Schlüsselpaars (r_{b}, R_{b}; r_{ück}, R_{rück}) erhalten wird, wobei der private Teil (r_{b}; r_{rück}) ein Tokenelement des zu übertragenden Tokens (T_{b}; T_{rück}) ist;
- ein Tokenreferenz-Register (TRR), eingerichtet zum Empfangen, von der ersten Teilnehmereinheit (TE1) oder der zweiten Teilnehmereinheit (TE2), einer Registrieranfrage (RA) umfassend zumindest eine dem zu übertragenden Token (T_{b}; T_{rück}) eindeutig zugeordnete Tokenreferenz (TR_{b}; TR_{Rück}) als eine zu registrierende Tokenreferenz (TR), wobei die Tokenreferenz (TR_{b}; TR_{Rück}) zumindest einen Tokenwert (v_{b}; v_{rück}) des Tokens (T_{b}; T_{rück}) und den erzeugten öffentlichen Teil (R_{b}; R_{rück}) des tokenindividuellen Schlüsselpaars (r_{b}, R_{b}; r_{ück}, R_{rück}) als Tokenreferenz-Elemente aufweist und eine einem Token (Tₐ; T_{c}) der ersten Teilnehmereinheit (TE1) zugeordnete Tokenreferenz (TRₐ; TR_{c}) als bereits registrierte Tokenreferenz (TRₐ; TR_{c}).

16. Das Transaktionssystem (TS) nach einem der Ansprüche 14 oder 15, wobei das Tokenreferenzregister eine Instanz eines Zentralwährungssystems ist und jeder Token ein digitales Zentralbankgeld ist.

## Claims

1. Method for transmitting tokens (T_{b}; T_{back}) in an electronic transaction system (TS), comprising the following method steps:
- receiving transmission information (Ü) from a first subscriber unit (TE1) in a second subscriber unit (TE2);
- creating a token-specific cryptographic key pair (r_{b}, R_{b}; r_{back}, R_{back}) for a token (T) to be transmitted, wherein a public part (R_{b}; R_{back}) of the token-specific cryptographic key pair (r_{b}, R_{b}; r_{back}, R_{back}) is obtained by applying a one-way cryptographic function to a generated private part (r_{b}; r_{back}) of the token-specific key pair (r_{b}, R_{b}; r_{back}, R_{back}), the private part (r_{b}; r_{back}) being a token element of the token (T_{b}; T_{back}) to be transmitted;
- creating a registration request (RA) in the first subscriber unit (TE1) for a token reference register (TRR) of the transaction system (TS) at least comprising a token reference (TR_{b}; TR_{back}) uniquely assigned to the token to be transmitted (T_{b}; T_{back}) as a token reference to be registered and a token reference (TRₐ; TR_{c}) assigned to a token (Tₐ; T_{c}) of the first subscriber unit (TE1) as a previously registered token reference (TRₐ; TR_{c});
**characterized in that**
the token-specific cryptographic key pair is created in the second subscriber unit (TE2);
- sending the generated public part (R_{b}; R_{back}) of the token-specific key pair (r_{b}, R_{b}; r_{back}, R_{back}) from the second subscriber unit (TE2) to the first subscriber unit (TE1);
the token reference (TR_{b}; TR_{back}) uniquely assigned to the token (T_{b}; T_{back}) to be transmitted comprises at least one token value (v_{b}; v_{back}) of the token (T_{b}; T_{back}) and the generated public part (R_{b}; R_{back}) of the token-specific key pair (r_{b}, R_{b}; r_{back}, R_{back}) as token reference elements; and
- sending from the first subscriber unit (TE1) to the second subscriber unit (TE2), a registration confirmation (RB) of the token reference register (TRR) for the successful registration of the token reference (TR_{b}; TR_{back}) to be registered, or the registration request (RA) to register the token reference (TR_{b}; TR_{back}) to be registered in the token reference register (TRR).

2. Method according to Claim 1, wherein the transmission information (Ü) is a token-transmission declaration of intent to transmit the token (T_{b}; T_{back}) to be transmitted from the first subscriber unit (TE1) to the second subscriber unit (TE2).

3. Method according to Claim 1 or 2, wherein the transmission information (Ü) is the token value (v_{b}; v_{back}) of the token (T_{b}; T_{back}) to be transmitted.

4. Method according to any one of the preceding claims, wherein, before the sending of the registration confirmation (RB), the registration request (RA) is sent from the first subscriber unit (TE1) to the token reference register (TRR) and wherein the registration confirmation (RB) is preferably sent from the token reference register (TRR) to the first subscriber unit (TE1).

5. Method according to any one of the preceding claims, wherein the first subscriber unit (TE1), after obtaining the registration confirmation (RB), transmits the token (T_{b}) comprising the token value (v_{b}) and the public part (R_{b}) of the token-specific key pair (r_{b}, R_{b}) to the second subscriber unit (TE2).

6. Method according to any one of the preceding Claims 1 to 3, wherein, depending on the presence of a communication link to the token reference register (TRR), the registration request (RA) is sent to the token reference register (TRR) either from the first subscriber unit (TE1) or from the second subscriber unit (TE2), and wherein a registration confirmation (RB) is preferably sent from the token reference register (TRR) to the subscriber unit (TE1, TE2) sending the registration request (RA) to the token reference register (TRR).

7. Method according to Claim 6,
wherein the first subscriber unit (TE1) provides a communication link between the second subscriber unit (TE2) and the token reference register (TRR) if the registration request (RA) is to be sent from the second subscriber unit (TE2) to the token reference register (TRR), but the second subscriber unit (TE2) has no communication link to the token reference register (TRR); or
wherein the second subscriber unit (TE2) provides a communication link between the first subscriber unit (TE1) and the token reference register (TRR) if the registration request (RA) is to be sent from the first subscriber unit (TE1) to the token reference register (TRR), but the first subscriber unit (TE1) has no communication link to the token reference register (TRR).

8. Method according to any one of the preceding Claims 1, 2 or 3, wherein the transmission information is received indirectly by a transmission of the token (Tₐ) of the first subscriber unit (TE1) with a token value (vₐ) greater than a claimed token value (v_{claimed}).

9. Method according to any one of the preceding Claims 1, 2, 3 or 8, wherein the registration request (RA) is sent from the second subscriber unit (TE2) to the token reference register (TRR), wherein the registration request (RA) also comprises the claimed token value (v_{claimed}) and wherein the registration confirmation (RB) is preferably sent from the token reference register (TRR) to the second subscriber unit (TE2).

10. Method according to any one of the preceding Claims 1, 2, 3, 8 or 9, wherein, after the registration confirmation (RB) has been obtained, the token (T_{back}) comprising the token value (v_{back}) and the public part (R_{back}) of the token-specific key pair (r_{back}, R_{back}) is deemed to have been transmitted from the second subscriber unit (TE2) to the first subscriber unit (TE1).

11. Method according to any one of the preceding claims, wherein, for the purpose of registering in the token reference register (TRR), it is verified whether the at least one token reference (TR_{b}) of the received registration request (RA) is stored in the token reference register (TRR), and storing the at least one token reference (TR_{b}) in a storage unit of the token reference register (TRR) for the purpose of registering the token (T_{b}) uniquely assigned to this token reference (TR_{b}) in the transaction system (TS), if it is determined in the verification step that the at least one token reference (TR_{b}) of the received registration request (RA) is not stored in the token reference register (TRR).

12. Method according to any one of the preceding claims, wherein the token (T_{b}) to be transmitted is obtained by a splitting step of the token (Tₐ) of the first subscriber unit (TE1), wherein, in order to split the token (Tₐ) of the first subscriber unit (TE1), the following method steps are carried out:
- splitting the token value (vₐ) of the token (Tₐ) of the first subscriber unit (TE1) into a first token subvalue (v_{b}) and a second token subvalue (v_{c}), wherein the sum of the first token subvalue (v_{b}) and the second token subvalue (v_{c}) corresponds to the token value (vₐ) of the token (Tₐ) to be split;
- receiving the token reference (TR_{b}) for the token (T_{b}) to be transmitted from the second subscriber unit (TE2) having the generated public part (R_{b}) of the token-specific key pair (r_{b}, R_{b}) of the token (T_{b}) to be transmitted;
- creating a token reference (TR_{c}) for a split token (T_{c}) in the first subscriber unit (TE1) having the second token subvalue (v_{c}) and a created public part (R_{c}) of a token-specific key pair (r_{c}, R_{c}) of the second split token (T_{c}); and
- creating the registration request (RA) comprising the token reference (TRₐ) of the token (Tₐ) of the first subscriber unit (TE1), the token reference (TR_{b}) for the token (T_{b}) to be transmitted and the token reference (TR_{c}) for the split token (T_{c}).

13. Method according to any one of the preceding Claims 1 to 11, wherein the token (T_{b}) to be transmitted is obtained by a switching step of the token (Tₐ) of the first subscriber unit (TE1), wherein, in order to split the token (Tₐ) of the first subscriber unit (TE1), the following method steps are carried out:
- receiving the token reference (TR_{b}) for the token (T_{b}) to be transmitted from the second subscriber unit (TE2) having the generated public part (R_{b}) of the token-specific key pair (r_{b}, R_{b}) of the token (T_{b}) to be transmitted;
- creating the registration request (RA) comprising the token reference (TRₐ) of the token (Tₐ) of the first subscriber unit (TE1) and the token reference (TR_{b}) for the token (T_{b}) to be transmitted.

14. Transaction system (TS) comprising a plurality of subscriber units (TE1, TE2), each configured for the direct transmission of tokens (T) according to any one of the preceding claims.

15. Transaction system (TS) according to Claim 14, comprising:
- a first subscriber unit (TE1), configured for sending transmission information (Ü) for a token to be transmitted (T_{b}; T_{back}) to a second subscriber unit (TE2);
- a second subscriber unit (TE2), configured for creating a token-specific cryptographic key pair (r_{b}, R_{b}; r_{back}, R_{back}) for the token (T) to be transmitted, wherein a public part (R_{b}; R_{back}) of the token-specific cryptographic key pair (r_{b}, R_{b}; r_{back}, R_{back}) is obtained by applying a one-way cryptographic function to a generated private part (r_{b}; r_{back}) of the token-specific key pair (r_{b}, R_{b}; r_{back}, R_{back}), the private part (r_{b}; r_{back}) being a token element of the token (T_{b}; T_{back}) to be transmitted;
- a token reference register (TRR), configured for receiving, from the first subscriber unit (TE1) or the second subscriber unit (TE2), a registration request (RA) comprising at least one token reference (TR_{b}; TR_{back}) uniquely assigned to the token (T_{b}; T_{back}) to be transmitted as a token reference (TR) to be registered, wherein the token reference (TR_{b}; TR_{back}) comprises at least one token value (v_{b}; v_{back}) of the token (T_{b}; T_{back}) and the generated public part (R_{b}; R_{back}) of the token-specific key pair (r_{b}, R_{b}; r_{back}, R_{back}) as token reference elements and a token reference (TRₐ; TR_{c}) assigned to a token (Tₐ; T_{c}) of the first subscriber unit (TE1) as a previously registered token reference (TRₐ; TR_{c}).

16. Transaction system (TS) according to either one of Claims 14 and 15, wherein the token reference register is an instance of a central currency system and each token is a digital central bank currency.

## Revendications

1. Procédé de transmission de jetons (T_{b} ; T_{rück}) dans un système de transaction électronique (TS), comprenant les étapes de procédé suivantes :
- réception d'une information de transmission (Ü) d'une première unité de participant (TE1) dans une deuxième unité de participant (TE2) ;
- génération d'une paire de clés cryptographiques spécifique du jeton (r_{b}, R_{b} ; r_{ück}, R_{rück}) pour un jeton à transmettre (T), une partie publique (R_{b}; R_{rück}) de la paire de clés cryptographiques spécifique du jeton (r_{b}, R_{b} ; r_{ück}, R_{rück}) étant obtenue par l'application d'une fonction unidirectionnelle cryptographique à une partie privée générée (r_{b}; r_{rück}) de la paire de clés cryptographiques spécifique du jeton (r_{b} ; r_{rück}), la partie privée (r_{b} ; r_{rück}) étant un élément de jeton du jeton à transmettre (T_{b}; T_{rück}) ;
- génération d'une demande d'enregistrement (RA) dans la première unité de participant (TE1) pour un registre de référence de jeton (TRR) du système de transaction (TS) comprenant au moins une référence de jeton (TR_{b} ; TR_{Rück}) attribuée de manière non ambiguë au jeton à transmettre (T_{b} ; T_{rück}) en tant que référence de jeton à enregistrer et une référence de jeton (TRₐ ; TR_{c}) attribuée à un jeton (Tₐ; T_{c}) de la première unité de participant (TE1) en tant que référence de jeton déjà enregistrée (TRₐ ; TR_{c}) ;
**caractérisé en ce que**
la génération de la paire de clés cryptographiques spécifique du jeton a lieu dans la deuxième unité de participant (TE2) ;
- un envoi est effectué de la partie publique générée (R_{b} ; R_{rück}) de la paire de clés cryptographiques spécifique du jeton (r_{b}, R_{b} ; r_{ück}, R_{rück}) de la deuxième unité de participant (TE2) à la première unité de participant (TE1) ;
la référence de jeton (TR_{b} ; TR_{Rück}) attribuée de manière non ambiguë au jeton à transmettre (T_{b} ; T_{rück}) contient au moins une valeur de jeton (v_{b} ; v_{rück}) du jeton (T_{b} ; T_{rück}) et la partie publique générée (R_{b}; R_{rück}) de la paire de clés cryptographiques spécifique du jeton (r_{b}, R_{b}; r_{ück}, R_{rück}) en tant qu'éléments de référence de jeton ; et
- un envoi est effectué de la première unité de participant (TE1) à la deuxième unité de participant (TE2), d'une confirmation d'enregistrement (RB) du registre de référence de jeton (TRR) pour un enregistrement effectué de la référence de jeton à enregistrer (TR_{b} ; TR_{Rück}), ou de la demande d'enregistrement (RA) pour l'enregistrement de la référence de jeton à enregistrer (TR_{b} ; TR_{Rück}) dans le registre de référence de jeton (TRR).

2. Procédé selon la revendication 1, dans lequel l'information de transmission (Ü) est une déclaration d'intention de transmission de jeton pour la transmission du jeton à transmettre (T_{b}; T_{rück}) de la première unité de participant (TE1) à la deuxième unité de participant (TE2).

3. Procédé selon la revendication 1 ou 2, dans lequel l'information de transmission (Ü) est la valeur de jeton (v_{b} ; v_{rück}) du jeton à transmettre (T_{b}; T_{rück}).

4. Procédé selon l'une quelconque des revendications précédentes, dans lequel, avant l'envoi de la confirmation d'enregistrement (RB), la demande d'enregistrement (RA) est envoyée par la première unité de participant (TE1) au registre de référence de jeton (TRR), et dans lequel, de préférence, la confirmation d'enregistrement (RB) est envoyée par le registre de référence de jeton (TRR) à la première unité de participant (TE1).

5. Procédé selon l'une quelconque des revendications précédentes, dans lequel la première unité de participant (TE1), après avoir reçu la confirmation d'enregistrement (RB), transmet le jeton (T_{b}) contenant la valeur de jeton (v_{b}) et la partie publique (R_{b}) de la paire de clés spécifique du jeton (r_{b}, R_{b}) à la deuxième unité de participant (TE2).

6. Procédé selon l'une quelconque des revendications 1 à 3, dans lequel la demande d'enregistrement (RA) est envoyée, en fonction de la présence d'une connexion de communication avec le registre de référence de jeton (TRR), soit par la première unité de participant (TE1), soit par la deuxième unité de participant (TE2) au registre de référence de jeton (TRR), et dans lequel, de préférence, une confirmation d'enregistrement (RB) est envoyée par le registre de référence de jeton (TRR) à l'unité de participant (TE1, TE2) ayant envoyé la demande d'enregistrement (RA) au registre de référence de jeton (TRR).

7. Procédé selon la revendication 6,
dans lequel la première unité de participant (TE1) fournit une connexion de communication entre la deuxième unité de participant (TE2) et le registre de référence de jeton (TRR) lorsque la demande d'enregistrement (RA) doit être envoyée par la deuxième unité de participant (TE2) au registre de référence de jeton (TRR), mais que la deuxième unité de participant (TE2) ne possède pas de connexion de communication avec le registre de référence de jeton (TRR) ; ou
dans lequel la deuxième unité de participant (TE2) fournit une connexion de communication entre la première unité de participant (TE1) et le registre de référence de jeton (TRR) lorsque la demande d'enregistrement (RA) doit être envoyée par la première unité de participant (TE1) au registre de référence de jeton (TRR), mais que la première unité de participant (TE1) ne possède pas de connexion de communication avec le registre de référence de jeton (TRR).

8. Procédé selon l'une quelconque des revendications précédentes 1, 2 ou 3, dans lequel l'information de transmission est reçue indirectement par une transmission du jeton (Tₐ) de la première unité de participant (TE1) avec une valeur de jeton (vₐ) supérieure à une valeur de jeton demandée (v_{gefordert}).

9. Procédé selon l'une quelconque des revendications précédentes 1, 2, 3 ou 8, dans lequel la demande d'enregistrement (RA) est envoyée par la deuxième unité de participant (TE2) au registre de référence de jeton (TRR), la demande d'enregistrement (RA) comprenant également la valeur de jeton demandée (v_{gefordert}) et, de préférence, la confirmation d'enregistrement (RB) étant envoyée par le registre de référence de jeton (TRR) à la deuxième unité de participant (TE2).

10. Procédé selon l'une quelconque des revendications précédentes 1, 2, 3, 8 ou 9, dans lequel, après réception de la confirmation d'enregistrement (RB), le jeton (T_{rück}) contenant la valeur de jeton (v_{rück}) et la partie publique (R_{rück}) de la paire de clés spécifique du jeton (r_{rück}, R_{rück}) est considéré comme ayant été transmis de la deuxième unité de participant (TE2) à la première unité de participant (TE1).

11. Procédé selon l'une quelconque des revendications précédentes, dans lequel, pour l'enregistrement dans le registre de référence de jeton (TRR), il est vérifié si ladite au moins une référence de jeton (TR_{b}) de la demande d'enregistrement (RA) reçue est stockée dans le registre de référence de jeton (TRR), et ladite au moins une référence de jeton (TR_{b}) est stockée dans une unité de stockage du registre de référence de jeton (TRR) pour enregistrer le jeton (T_{b}) attribué de manière non ambiguë à cette référence de jeton (TR_{b}) dans le système de transaction (TS), lorsqu'il est établi, à l'étape de vérification, que ladite au moins une référence de jeton (TR_{b}) de la demande d'enregistrement (RA) reçue n'est pas stockée dans le registre de référence de jeton (TRR).

12. Procédé selon l'une quelconque des revendications précédentes, dans lequel le jeton à transmettre (T_{b}) est obtenu par une étape de fractionnement du jeton (Tₐ) de la première unité de participant (TE1), les étapes de procédé suivantes étant exécutées pour le fractionnement du jeton (Tₐ) de la première unité de participant (TE1) :
- fractionnement de la valeur de jeton (vₐ) du jeton (Tₐ) de la première unité de participant (TE1) en une première valeur partielle de jeton (v_{b}) et en une deuxième valeur partielle de jeton (v_{c}), la somme de la première valeur partielle de jeton (v_{b}) et de la deuxième valeur partielle de jeton (v_{c}) correspondant à la valeur de jeton (vₐ) du jeton à fractionner (Tₐ) ;
- réception de la référence de jeton (TR_{b}) pour le jeton à transmettre (T_{b}) de la deuxième unité de participant (TE2) contenant la partie publique générée (R_{b}) de la paire de clés spécifique du jeton (r_{b}, R_{b}) du jeton à transmettre (T_{b}) ;
- génération d'une référence de jeton (TR_{c}) pour un jeton fractionné (T_{c}) dans la première unité de participant (TE1) contenant la deuxième valeur partielle de jeton (v_{c}) et une partie publique générée (R_{c}) d'une paire de clés spécifique du jeton (r_{c}, R_{c}) du deuxième jeton fractionné (T_{c}) ; et
- génération de la demande d'enregistrement (RA) comprenant la référence de jeton (TRₐ) du jeton (Tₐ) de la première unité de participant (TE1), la référence de jeton (TR_{b}) pour le jeton à transmettre (T_{b}) et la référence de jeton (TR_{c}) pour le jeton fractionné (T_{c}).

13. Procédé selon l'une quelconque des revendications précédentes 1 à 11, dans lequel le jeton à transmettre (T_{b}) est obtenu par une étape de commutation du jeton (Tₐ) de la première unité de participant (TE1), les étapes de procédé suivantes étant exécutées pour la commutation du jeton (Tₐ) de la première unité de participant (TE1) :
- réception de la référence de jeton (TR_{b}) pour le jeton à transmettre (T_{b}) de la deuxième unité de participant (TE2) contenant la partie publique générée (R_{b}) de la paire de clés spécifique du jeton (r_{b}, R_{b}) du jeton à transmettre (T_{b}) ;
- génération de la demande d'enregistrement (RA) comprenant la référence de jeton (TRₐ) du jeton (Tₐ) de la première unité de participant (TE1) et la référence de jeton (TR_{b}) pour le jeton à transmettre (T_{b}).

14. Système de transaction (TS) comportant une pluralité d'unités de participant (TE1, TE2), chacune configurée pour la transmission de jetons (T) selon l'une quelconque des revendications précédentes.

15. Système de transaction (TS) selon la revendication 14, comprenant :
- une première unité de participant (TE1), configurée pour l'envoi d'une information de transmission (Ü) pour un jeton à transmettre (T_{b} ; T_{rück}) à une deuxième unité de participant (TE2) ;
- une deuxième unité de participant (TE2), configurée pour la génération d'une paire de clés cryptographiques spécifique du jeton (r_{b}, R_{b} ; r_{ück}, R_{rück}) pour un jeton à transmettre (T), une partie publique (R_{b} ; R_{rück}) de la paire de clés cryptographiques spécifique du jeton (r_{b}, R_{b} ; r_{ück}, R_{rück}) étant obtenue par l'application d'une fonction unidirectionnelle cryptographique à une partie privée générée (r_{b} ; r_{rück}) de la paire de clés cryptographiques spécifique du jeton (r_{b} ; r_{rück}), la partie privée (r_{b} ; r_{rück}) étant un élément de jeton du jeton à transmettre (T_{b} ; T_{rück}) ;
- un registre de référence de jeton (TRR), configuré pour la réception, en provenance de la première unité de participant (TE1) ou de la deuxième unité de participant (TE2), d'une demande d'enregistrement (RA) comprenant au moins une référence de jeton (TR_{b} ; TR_{Rück}) attribuée de manière non ambiguë au jeton à transmettre (T_{b} ; T_{rück}) en tant que référence de jeton à enregistrer (TR), la référence de jeton (TR_{b} ; TR_{Rück}) contenant au moins une valeur de jeton v_{b} ; v_{rück}) du jeton (T_{b} ; T_{rück}) et la partie publique générée (R_{b} ; R_{rück}) de la paire de clés cryptographiques spécifique du jeton (r_{b}, R_{b} ; r_{ück}, R_{rück}) en tant qu'éléments de référence de jeton et une référence de jeton (TRₐ ; TR_{C}) attribuée à un jeton (Tₐ ; T_{c}) de la première unité de participant (TE1) en tant que référence de jeton déjà enregistrée (TRₐ ; TR_{C}).

16. Système de transaction (TS) selon l'une quelconque des revendications 14 ou 15, dans lequel le registre de référence de jeton est une instance d'un système de monnaie centrale et chaque jeton est une monnaie numérique de banque centrale.
